(19) **Europäisches Patentamt European Patent Office Office européen des brevets**

(11) **EP 4 595 236 B1**

(12) **EUROPEAN PATENT SPECIFICATION**

(45) Date of publication and mention
of the grant of the patent:
**29.04.2026 Bulletin 2026/18**

(21) Application number: **23782864.5**

(22) Date of filing: **27.09.2023**

(51) International Patent Classification (IPC):
**H04B 1/69** (2011.01)

(52) Cooperative Patent Classification (CPC):
**H04B 1/69; H04B 2001/6908**

(86) International application number:
**PCT/EP2023/076809**

(87) International publication number:
**WO 2024/068796 (04.04.2024 Gazette 2024/14)**

(54) **DATA TRANSCEIVER FOR TRANSMITTING AND/OR RECEIVING DATA USING A PSEUDO-RANDOM HOPPING PATTERN**

DATENSENDER-EMPFÄNGER ZUM SENDEN UND/ODER EMPFANGEN VON DATEN UNTER VERWENDUNG EINES PSEUDO-ZUFALLS-SPRUNGMUSTERS

ÉMETTEUR-RÉCEPTEUR DE DONNÉES POUR TRANSMETTRE ET/OU RECEVOIR DES DONNÉES À L'AIDE D'UN MOTIF DE SAUT PSEUDO-ALÉATOIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.09.2022 DE 102022210273**

(43) Date of publication of application:
**06.08.2025 Bulletin 2025/32**

(73) Proprietor: **Fraunhofer-Gesellschaft zur Förderung
der angewandten Forschung e.V.
80686 München (DE)**

(72) Inventors:
 • **KILIAN, Gerd
  91058 Erlangen (DE)**
 • **KNEIßL, Jakob
  91058 Erlangen (DE)**
 • **BIEG, Karol
  91058 Erlangen (DE)**
 • **BERNHARD, Josef
  91058 Erlangen (DE)**
 • **SOLLER, Dominik
  91058 Erlangen (DE)**

 • **NEUMÜLLER, Clemens
  91058 Erlangen (DE)**
 • **ERETH, Stefan
  91058 Erlangen (DE)**
 • **BURGER, Maximilian
  90461 Nürnberg (DE)**

(74) Representative: **Schlenker, Julian et al
Schoppe, Zimmermann, Stöckeler
Zinkler, Schenk & Partner mbB
Patentanwälte
Radlkoferstraße 2
81373 München (DE)**

(56) References cited:
 **US-A1- 2021 112 485    US-A1- 2021 194 538
 US-A1- 2021 250 146**

 • **"Short Range Devices; Low Throughput Networks (LTN); Protocols for radio interface A", vol. ERM TG28, no. V1.1.1, 4 June 2018 (2018-06-04), pages 1 - 113, XP014319320, Retrieved from the Internet <URL:http://www.etsi.org/deliver/etsi_ts/103300_103399/103357/01.01.01_60/ts_103357v010101p.pdf> [retrieved on 20180604]**

**Description**

Embodiments of the present invention relate to a data transceiver and, more particularly, to a data transceiver configured to transmit and/or receive data using a pseudo-random hopping pattern. Some embodiments relate to a transceiver configured to generate a hopping pattern having an almost uniform time jitter with constraint time differences.

In unlicensed frequency bands, such as, for example, the ISM band (ISM = industrial, scientific and medical), uncoordinated wireless communication systems compete for the same spectrum. [1] proposes a low power wide area network in which a message (e.g., a telegram or data packet) is fragmented into multiple sub-packets (or sub-data packets) that are transmitted non-concurrently / discontinuously over the radio channel, in order to reduce the probability of a total collision with interference, which would cause a loss of the original message. Thereby, appropriate error correction codes are employed to compensate for single sub-packet collisions. Nevertheless, burst collisions, involving multiple consecutive sub-packets, have to be avoided as they can still lead to the loss of an entire message.

US 2021/250146 A1 relates to a data transmitter of a digital communication system, wherein the data transmitter is configured to transmit a pilot signal, wherein, for at least one partial transfer duration of a transfer duration of the pilot signal, the pilot signal is precisely at one frequency of a plurality of frequencies of a frequency channel used for data transfer by the data transmitter according to a modulation method, wherein the partial transfer duration corresponds to at least two symbol durations, preferably at least three symbol durations, or particularly preferably at least four symbol durations, of the data transfer of the data transmitter.

Therefore, it is the object of the present invention to reduce the probability of collisions involving multiple consecutive sub-packets from multiple networks covering an at least partially overlapping area.

This object is solved by the independent claims.

Advantageous implementations are addressed by the dependent claims.

Embodiments provide a transceiver of a wireless communication network, wherein the transceiver is configured to transmit and/or receive data [e.g., a telegram] using a hopping pattern, the hopping pattern defining a sequence of time instants (or instants of time, or time instances, or points in time) relative to a periodic grid, wherein the transceiver is configured to determine [e.g., generate or calculate] the hopping pattern by determining, considering a first determination constraint and a second determination constraint, time distances [e.g., time delays, time differences] between immediately consecutive time instants of the sequence of time instants, [e.g., such that the time instants are pseudo randomly distributed over time], wherein the first determination constraint specifies that the time distances are pseudo-randomly distributed between a predefined minimum time distance and a predefined maximum time distance, wherein the second determination constraint specifies that the time distances lie within respective time ranges defined by a time distance [e.g., offset] limiting function, each of the time ranges defining a maximum allowed distance [e.g., offset] of a respective time instant of the hopping pattern towards a respective grid position of the periodic grid, wherein, in case that a time instant determined as specified by the first determination constraint does not lie within the respective time range of the time distance limiting function as specified by the second determination constraint, then said time instant is mapped into [e.g., shifted to a most proximate edge or reflected into] the respective time range of the time distance limiting function as specified by the second determination constraint.

In embodiments, the time ranges defined by the time distance limiting function are equal to or smaller than a distance between two immediately subsequent grid positions of the periodic grid.

In embodiments, the time ranges defined by the time distance limiting function have at least two different sizes.

In embodiments, a proper subset out of the time ranges defined by time distance limiting function are smaller than a difference between the predefined maximum time distance and the predefined minimum time distance.

In embodiments, the time distances are confined [or limited] by the time ranges defined by the time distance limiting function to fulfill a synchronization enablement criteria, wherein the synchronization enablement criteria specifies that each i-th time instant of the sequence of time instants lies

- at a respective grid position of the periodic time grid [e.g., respective time range = 0], or
- within a predefined time spawn around a respective grid position of the periodic time grid [e.g., respective time range = predefined time spawn], or
- within a predefined time spawn having predefined offset towards a respective grid position of the periodic time grid,

wherein i is equal to or greater than five.

In embodiments, the transceiver is configured to synchronize to the hopping pattern based on the synchronization enablement criteria.

In embodiments, the predefined time spawn is at least by a factor of two smaller than a difference between the predefined maximum time distance and the predefined minimum time distance.

In embodiments, the sequence of time instants are grouped into blocks of [e.g., immediately subsequent] time instants, wherein the time ranges defined by the time distance limiting function are grouped into blocks of time ranges, the blocks of time ranges corresponding to respective blocks of time instants.

In embodiments, the time ranges located at a beginning and/or end of a block of time ranges limit a position of a respective time instant to fulfill a synchronization enablement criteria.

In embodiments, the synchronization enablement criteria specifies that the respective time instants lies

- at a respective grid position of the periodic time grid,
- within a predefined time spawn around a respective grid position of the periodic time grid, or
- within a predefined time spawn having predefined offset towards the respective grid position of the periodic time grid.

In embodiments, time ranges located at a beginning and/or end of a group of time ranges of the time distance limiting function are smaller than time ranges located at a center of said group of time ranges.

In embodiments, time ranges located at a beginning and/or end of a group of time ranges define smaller maximum allowed distances of a respective time instant of the hopping pattern towards a respective grid position of the periodic grid than time ranges located at a center of the group of time ranges.

For example, each block of time instants comprises at least five time instants [e.g., or at least 10, 20 or 30 time instants]. According to the claimed invention, each block of time instants comprises 36 time instants.

Further embodiments provide a transceiver of a wireless communication network, wherein the transceiver is configured to transmit and/or receive data [e.g., a telegram] using a hopping pattern, the hopping pattern defining a sequence of time instants relative to a periodic time grid, wherein the transceiver is configured to determine [e.g., generate or calculate] the hopping pattern by determining, using a first determination function and a second determination function, time offsets between time instants of at least a block of time instants of the sequence of time instants and respective grid positions of the periodic time grid, wherein according to the first determination function the time offsets are pseudo-randomly distributed within respective time offset ranges, wherein the time offset ranges are defined, for a second time instant and each following time instant of the block of time instants, by a respective relative minimum time distance and relative maximum time difference with respect to an immediately preceding time instant, wherein the relative minimum time distances and relative maximum time distances are individually defined based on a mapping function for the second and each following time instant of the block of time instants, wherein according to the second determination function a window function is applied to the time offsets obtained by the first determination function.

In embodiments, the window function limits the time offsets obtained by the first determination function [e.g., so that the emerging time difference after applying the windowing function is not violated (even in the most extreme cases on the boundaries on the time distance limiting function)]-

In embodiments, the window function limits the absolute time differences between immediately subsequent time instants of the block of time instants to lie within an absolute time difference range defined by an absolute maximum time difference and an absolute minimum time difference.

In embodiments, the window function reduces time offsets between time instants and respective grid positions that are located at a beginning and/or end of the block of time ranges to a greater value than time offsets between time instants and respective grid positions that are located at a center of the block of time instants.

In embodiments, the window function reduces time offsets between time instants and respective grid positions that are located at a beginning and/or end of the block of time instants such that the respective time instants fulfill a synchronization enablement criteria.

In embodiments, the synchronization enablement criteria specifies that the respective time instants lie

- at a respective grid position of the periodic time grid, or
- within a predefined time spawn around a respective grid position of the periodic time grid, or
- within a predefined time spawn having predefined offset towards a respective grid position of the periodic time grid,

wherein i is equal to or greater than five.

In embodiments, the transceiver is configured to synchronize to the hopping pattern based on the synchronization enablement criteria.

In embodiments, the mapping function is based on a table.

In embodiments, the windowing function is based on a table.

In embodiments, the transceiver is configured to determine [e.g., generate or calculate] the hopping pattern further using a third determination function, wherein according to the third determination function an offset is applied to at least a consecutive part of time offsets.

In embodiments, the data is fragmented into a plurality of sub-packets, each of the sub-packets being transmitted at one time instant.

In embodiments, the transceiver is configured to determine the hopping pattern using a mapping function that considers the first determination constraint and the second determination constraint, wherein the mapping function pseudo-randomly determines the time distances based on at least one out of an ID of a base station of the wireless communication network and the sequence index, or a respective portion thereof.

In embodiments, the transceiver is a node of the wireless communication network.

In embodiments, the transceiver obtains the ID of the base station of the wireless communication network and the block number when synchronizing to the wireless communication network.

In embodiments, the transceiver is a base station of the wireless communication network.

According to the claimed invention, the transceiver is configured to transmit and/or receive data using a hopping pattern, wherein the transceiver is configured to determine an n-th time instant of the hopping pattern based on the following formula:

$$R_{RE}(n) =$$
$$\begin{cases} \left\lfloor \left(R_{RE}'(n) * w(m) + R_{DC}(n) * \left(260 - w(m)\right) + 2^{15}\right)/2^{16} \right\rfloor - 130, \text{ for } R_{RE}'(n) < 2^{16} \\ \left\lfloor \left(\left(2^{17} - 1 - R_{RE}'(n)\right) * w(m) + R_{DC}(n) * \left(260 - w(m)\right) + 2^{15}\right)/2^{16} \right\rfloor - 130, \text{ for } R_{RE}'(n) \geq 2^{16} \end{cases}$$

wherein $R_{RE}(n)$ describes a pseudo-random time offset [e.g., in symbols] [e.g., n-th time offset] with respect to a respective position [e.g., n-th position] of a periodic time grid having a periodic spacing of 260 symbols,

wherein $R_{RE}'(n)$ describes a sequence of pseudo-random time offsets, wherein n is a natural number, wherein $m = n$ modulo 36,

wherein $w(m)$ describes a window function, wherein $R_{DC}(n)$ describes an pseudo-random offset.

In embodiments, the $R_{RE}'(n)$ is based on the following formula

$$R_{RE}'(n) = \begin{cases} 2^{15} + r(n), & \text{for } m = 0 \\ \left(R_{RE}'(n-1) + r(n)\right) \text{ modulo } 2^{17}, & \text{else} \end{cases}$$

wherein $r(n)$ is a pseudorandom sequence.

In embodiments, transceiver is configured to determine the pseudorandom sequence $r(n)$ based on the following formula:

$$r(n) = \lfloor BSSHT\_CRC(n) * (2 * c(m) + 1)/2^{16} \rfloor - c(m), n \in \{0,1,2,\dots, N_{RE,bea} - 1\}$$

wherein BSSHT_CRC(n) is a pseudo-random number that depends on an ID of a base station and the n-th time instant, or a respective part thereof, wherein $c(m)$ is a time pattern step size, wherein $N_{RE,bea}$ describes a number of elements after which a calculation of BSSHT_CRC(n) has to be recalculated.

In embodiments, the transceiver is configured to determine the step size $c(m)$ based on the following table in dependence on m:

| $m$ | 0 | 1 | 2 | 3 | 4 | 5 | 6 | 7 | 8 |
|---|---|---|---|---|---|---|---|---|---|
| $c(m)$ | 32768 | 0 | 0 | 0 | 0 | 0 | 0 | 0 | 0 |

| $m$ | 9 | 10 | 11 | 12 | 13 | 14 | 15 | 16 | 17 |
|---|---|---|---|---|---|---|---|---|---|
| $c(m)$ | 5201 | 7057 | 7057 | 7057 | 7057 | 7057 | 7057 | 7057 | 7057 |

| $m$ | 18 | 19 | 20 | 21 | 22 | 23 | 24 | 25 | 26 |
|---|---|---|---|---|---|---|---|---|---|
| $c(m)$ | 7057 | 7057 | 7057 | 7057 | 7057 | 7057 | 7057 | 7057 | 7057 |

| $m$ | 27 | 28 | 29 | 30 | 31 | 32 | 33 | 34 | 35 |
|---|---|---|---|---|---|---|---|---|---|
| $c(m)$ | 5201 | 0 | 0 | 0 | 0 | 0 | 0 | 0 | 0 |

In embodiments, the transceiver is configured to determine the window function w(m) based on the following table in dependence on m:

| $m$ | 0 | 1 | 2 | 3 | 4 | 5 | 6 | 7 | 8 |
|---|---|---|---|---|---|---|---|---|---|
| $w(m)$ | 28 | 56 | 84 | 112 | 140 | 168 | 196 | 224 | 252 |

| $m$ | 9 | 10 | 11 | 12 | 13 | 14 | 15 | 16 | 17 |
|---|---|---|---|---|---|---|---|---|---|
| $w(m)$ | 260 | 260 | 260 | 260 | 260 | 260 | 260 | 260 | 260 |

| $m$ | 18 | 19 | 20 | 21 | 22 | 23 | 24 | 25 | 26 |
|---|---|---|---|---|---|---|---|---|---|
| $w(m)$ | 260 | 260 | 260 | 260 | 260 | 260 | 260 | 260 | 260 |

| $m$ | 27 | 28 | 29 | 30 | 31 | 32 | 33 | 34 | 35 |
|---|---|---|---|---|---|---|---|---|---|
| $w(m)$ | 252 | 224 | 196 | 168 | 140 | 112 | 84 | 56 | 28 |

In embodiments, the transceiver is configured to determine the pseudo-random offset $R_{DC}(n)$ based on the following formula:

$$R_{DC}(n) = CRC32(BSSHE(R_E(n))) \text{ modulo } 2^{16}$$

wherein CRC32 is a 32-bit cyclic redundancy check, wherein $R_E(n) = \left\lfloor \frac{n+18}{36} \right\rfloor \text{ modulo } 2^{16}$ , wherein *BSSHE* is a combined number resulting from a combination of $R_E(n)$ and a short address of the base station [e.g.,a part of the ID of the base station].

In embodiments, the transceiver is configured to determine a time difference between immediately subsequent hops of the hopping pattern based on the following formula:

$$T_{RE}(\text{n}) = \big(260 - R_{RE}(\text{n} - 1) + R_{RE}(\text{n})\big) * \Delta T_{sym_{UL-ULP}}, \quad \text{n} \in \{1,2,3,...,N_{RE} - 1\},$$

wherein $\Delta T_{symUL-ULP}$ is a symbol duration, wherein $N_{RE}$ is the total number of time instants.

Further embodiments provide a method for transmitting and/or receiving data. The method comprises a step of transmitting and/or receiving data [e.g., a telegram] using a hopping pattern, the hopping pattern defining a sequence of time instants relative to a periodic grid. Further, the method comprises a step of determining [e.g., generate or calculate] the hopping pattern by determining, considering a first determination constraint and a second determination constraint, time distances [e.g., time delays, time differences] between immediately consecutive time instants of the sequence of time instants, [e.g., such that the time instants are pseudo randomly distributed over time], wherein the first determination constraint specifies that the time distances are pseudo-randomly distributed between a predefined minimum time distance and a predefined maximum time distance, wherein the second determination constraint specifies that the time distances lie within respective time ranges defined by a time distance limiting function, each of the time ranges defining a maximum allowed distance of a respective time instant of the hopping pattern towards a respective grid position of the periodic grid, wherein, in case that a time instant determined as specified by the first determination constraint does not lie within the respective time range of the time distance limiting function as specified by the second determination constraint, then said time instant is mapped into [e.g., shifted to a most proximate edge or reflected into] the respective time range of the time distance limiting function as specified by the second determination constraint.

Further embodiments provide a method for transmitting and/or receiving data. The method comprises a step of transmitting and/or receiving data [e.g., a telegram] using a hopping pattern, the hopping pattern defining a sequence of time instants relative to a periodic time grid. Further, the method comprises a step of determining [e.g., generate or calculate] the hopping pattern by determining, using a first determination function and a second determination function, time offsets between time instants of at least a block of time instants of the sequence of time instants and respective grid positions of the periodic time grid, wherein according to the first determination function the time offsets are pseudo-randomly distributed within respective time offset ranges, wherein the time offset ranges are defined, for a second time instant and each following time instant of the block of time instants, by a respective relative minimum time distance and relative maximum time difference with respect to an immediately preceding time instant, wherein the relative minimum time distances and relative maximum time distances are individually defined based on a mapping function for the second and each following time instant of the block of time instants, wherein according to the second determination function a window function is applied to the time offsets obtained by the first determination function.

Further embodiments according to the claimed invention provide a method for transmitting and/or receiving data. The method comprises a step of transmitting and/or receiving data using a hopping pattern. Further, the method comprises a step of determining an n-th time instant of the hopping pattern based on the following formula:

$$R_{RE}(n) =$$

$$\begin{cases} \left\lfloor \left(R_{RE}'(n) * w(m) + R_{DC}(n) * \left(260 - \mathbf{w}(m)\right) + 2^{15}\right)/2^{16} \right\rfloor - 130, \text{ for } R_{RE}'(n) < 2^{16} \\ \left\lfloor \left(\left(2^{17} - 1 - R_{RE}'(n)\right) * \mathbf{w}(m) + R_{DC}(n) * \left(260 - \mathbf{w}(m)\right) + 2^{15}\right)/2^{16} \right\rfloor - 130, \text{ for } R_{RE}'(n) \geq 2^{16} \end{cases}$$

wherein $R_{RE}(n)$ describes a pseudo-random time offset [e.g., in symbols] [e.g., n-th time offset] with respect to a respective position [e.g., n-th position] of a periodic time grid having a periodic spacing of 260 symbols, wherein $R_{RE}'(n)$ describes a sequence of pseudo-random time offsets, wherein n is a natural number, wherein $m = n \ modulo$ 36, wherein w(m) describes a window function, wherein $R_{DC}(n)$ describes an pseudo-random offset.

Further embodiments provide a transceiver of a wireless communication network, wherein the transceiver is configured to transmit and/or receive data [e.g., a telegram] using a hopping pattern, the hopping pattern defining a sequence of time instants relative to a periodic time grid, wherein the transceiver is configured to determine [e.g., generate or calculate] the hopping pattern by determining, using a first determination function and a second determination function, time offsets between time instants of at least a block of time instants of the sequence of time instants and respective grid positions of the periodic time grid, wherein the first determination function specifies that time distances between immediately subsequent / consecutive time instants of the block of time instants are pseudo-randomly distributed between a predefined minimum time distance and a predefined maximum time distance, wherein the second determination function specifies that time offsets between the time instants of the block of time instants and the respective grid positions lie within respective time offset ranges around respective grid positions, the time offset ranges being defined by a time offset limiting function, each of the time offset ranges defining a maximum allowed offset of a respective time instant of the hopping pattern towards a respective grid position of the periodic grid, wherein, in case that a time instant determined as specified by the first determination function does not lie within the respective time offset range of the time distance limiting function as specified by the second determination function, then said time instant is mapped into [e.g., shifted to a most proximate edge or reflected into] the respective time offset range of the time offset limiting function as specified by the second determination function.

Embodiments of the present invention are described herein making reference to the appended drawings.

Fig. 1     shows a schematic block circuit diagram of a wireless communication system comprising a plurality of data transceivers;

Fig. 2     shows in a diagram an occupancy of a radio channel when a plurality of sub-packets are transmitting according to a time and frequency hopping pattern;

Fig. 3     shows a schematic block diagram of a transceiver, according to an embodiment of the present invention;

Fig. 4     shows in a diagram a sequence of transmission time instants relative to a periodic grid;

Fig. 5     shows in a diagram a sequence of transmission time instants obtained by determining time distances between immediately consecutive time instants of the sequence of time instants;

Fig. 6     shows in a diagram a mapping of the cumulated random walk to the corresponding relative grid offsets;

Fig. 7     shows in a diagram a sequence of transmission time instants obtained by determining time distances between immediately consecutive time instants of the sequence of time instants, according to an embodiment;

Fig. 8     shows in a diagram two blocks of time instants of a sequence of time instants defined by time offsets between the transmission time instants and respective grid positions, according to a further embodiment;

Fig. 9 shows the resulting probability density function for the sequence of time instants of Fig. 8;

Fig. 10 shows in a diagram two blocks of time instants of a sequence of time instants defined by time offsets between the transmission time instants and respective grid positions, according to a further embodiment;

Fig. 11 shows the resulting probability density function for the sequence of time instants of Fig. 10;

Fig. 12 shows in a diagram two blocks of time instants of a sequence of time instants defined by time offsets between the transmission time instants and respective grid positions, according to a further embodiment;

Fig. 13 shows the resulting probability density function for the sequence of time instants of Fig. 12;

Fig. 14 shows in a diagram two blocks of time instants of a sequence of time instants defined by time offsets between the transmission time instants and respective grid positions before applying a window function, according to an embodiment;

Fig. 15 shows in a diagram the two blocks of time instants of a sequence of time instants defined by time offsets between the transmission time instants and respective grid positions from Fig. 14 after applying a window function, according to an embodiment;

Fig. 16 shows the resulting probability density function for the sequence of time instants of Fig. 15;

Fig. 17 shows in a diagram the two blocks of time instants of a sequence of time instants defined by time offsets between the transmission time instants and respective grid positions from Fig. 15 after applying a window function and an additional (static) offset, according to an embodiment;

Fig. 18 shows the resulting probability density function for the sequence of time instants of Fig. 17;

Fig. 19 shows a schematic illustration of a definition of time differences difference $T_{RE}(n)$ between two resource elements.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instants, well-known structures and devices are shown in block diagram form rather than in detail in order to avoid obscuring embodiments of the present invention. In addition, features of the different embodiments described hereinafter may be combined with each other, unless specifically noted otherwise.

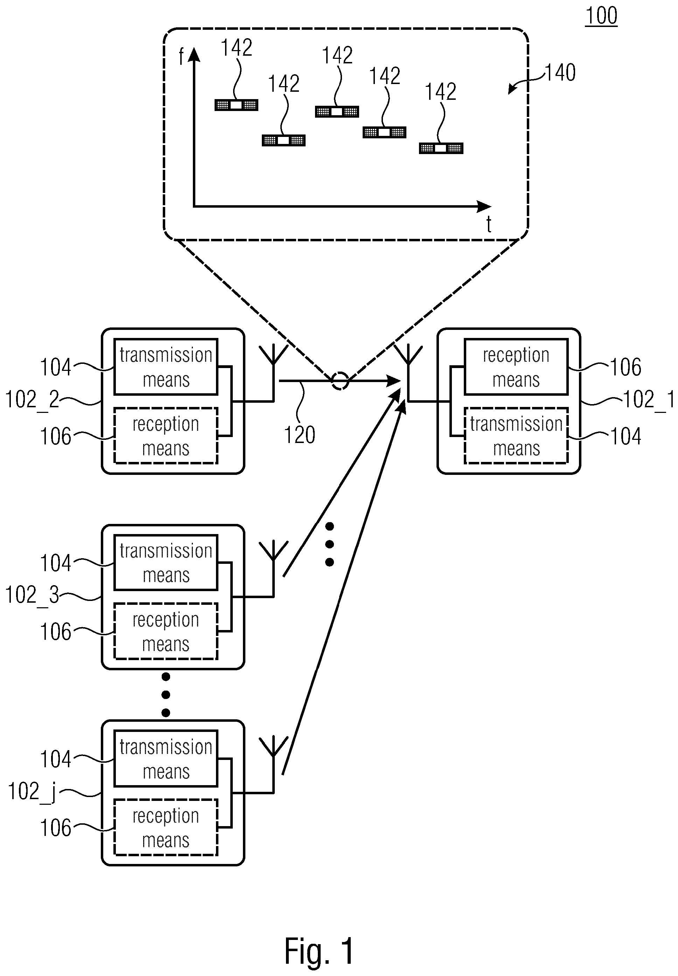

Fig. 1 shows a schematic block diagram of a wireless communication system 100 comprising a plurality of data transceivers 102_1-102_j. The wireless communication system 100, or more precisely, the data transceivers 102_1-102_j of the wireless communication system 100, can be configured to communicate in an unlicensed frequency band, such as, for example, the ISM band (ISM = industrial, scientific and medical), in which several uncoordinated wireless communication systems compete for the same radio resources.

Thereby, in Fig. 1 it is exemplarily assumed that one of the data transceivers 102_1-102_j, such as the data transceiver 102_2, is configured to split a data packet (e.g., of the physical layer) into a plurality of sub-packets 142 and to transmit the plurality of sub-packets 142 non-concurrently / discontiguously over the radio channel using a hopping pattern 140, e.g., by means of a signal 120 carrying the plurality of sub-packets 142, where another one of the data transceivers 102_1-102_j, such as the data transceiver 102_1, is configured to receive and combine the plurality of sub-packets 142, in order to obtain the original data packet.

In embodiments, the data transceivers 102_1-102_j can comprise transmitter units (or transmitter modules) 104 configured to transmit a signal 120 carrying a plurality of sub-packets 142 and/or receiver units (or receiver modules) 106 configured to receive a signal 120 carrying a plurality of sub-packets 142.

In embodiments, at least one of the transceivers 102_1-102_j, such as transceiver 102_1, can be a base station of the wireless communication system 100, where the other transceivers can be end-points (e.g., sensor or actuator nodes) of the wireless communication system 100. Naturally, it is also possible that all of the transceivers 102_1-102_j are end-points or base stations.

In embodiments, the data transceivers 102_1-102_j can be configured to transmit and receive data using the telegram splitting method. In telegram splitting, a telegram or data packet (e.g. of the physical layer) is split into a plurality of sub-packets (or partial data packets, or sub-data packets) 142, where the plurality of sub-packets 142 are transmitted distributed in time and/or frequency in correspondence with a hopping pattern 140. At a receiver side, the plurality of sub-packets 142 are received according to the hopping pattern 140 and reassembled (or combined), in order to obtain the original data packet. Thereby, each of the plurality of sub-packets 142 contains only a part of the original data packet, where the original data packet is encoded (e.g., channel-encoded) / comprises redundancy, such that only a proper subset of the sub-packets 142 is required to decode the original data packet without error.

In embodiments, the plurality of sub-data packets 142 can be distributed in time and/or frequency according to a hopping pattern.

A time hopping pattern can specify a sequence of transmission times or transmission time intervals at which the sub-packets are transmitted. For example, a first sub-packet can be sent at a first transmission time (or in a first transmission time slot) and a second sub-packet can be transmitted at a second transmission time (or in a second transmission time slot), wherein the first transmission time and the second transmission time are different. Thereby, the time hopping pattern can define the first transmission time and the second transmission time. Alternatively, the time hopping pattern can define the first transmission time and a time interval between the first transmission time and the second transmission time. Of course, the time hopping pattern may define only the time interval between the first transmission time and the second transmission time. There can be transmission pauses between the sub-packets in which no transmission takes place.

A frequency hopping pattern can specify a sequence of transmission frequencies or transmission frequency hops at which the sub-packets are transmitted. For example, a first sub-data may be transmitted at a first transmission frequency (or in a first frequency channel) and a second sub-packet may be transmitted at a second transmission frequency (or in a second frequency channel), wherein the first transmission frequency and the second transmission frequency are different. Thereby, the frequency hopping pattern may define the first transmission frequency and the second transmission frequency. Alternatively, the frequency hopping pattern may specify the first transmission frequency and a frequency interval (transmission frequency hop) between the first transmission frequency and the second transmission frequency. Of course, the frequency hopping pattern may define only the frequency interval (transmission frequency hop) between the first transmission frequency and the second transmission frequency.

Of course, the plurality of sub-packets 142 may also be transmitted distributed in both, time and frequency. The distribution of the plurality of sub-packets in time and in frequency can be defined by a time and frequency hopping pattern. A time and frequency hopping pattern may be the combination of a time hopping pattern and a frequency hopping pattern, i.e. a sequence of transmission times or transmission time intervals according to which the sub-packets are transmitted, wherein transmission frequencies (or transmission frequency hops) are associated with the transmission times (or transmission time intervals).

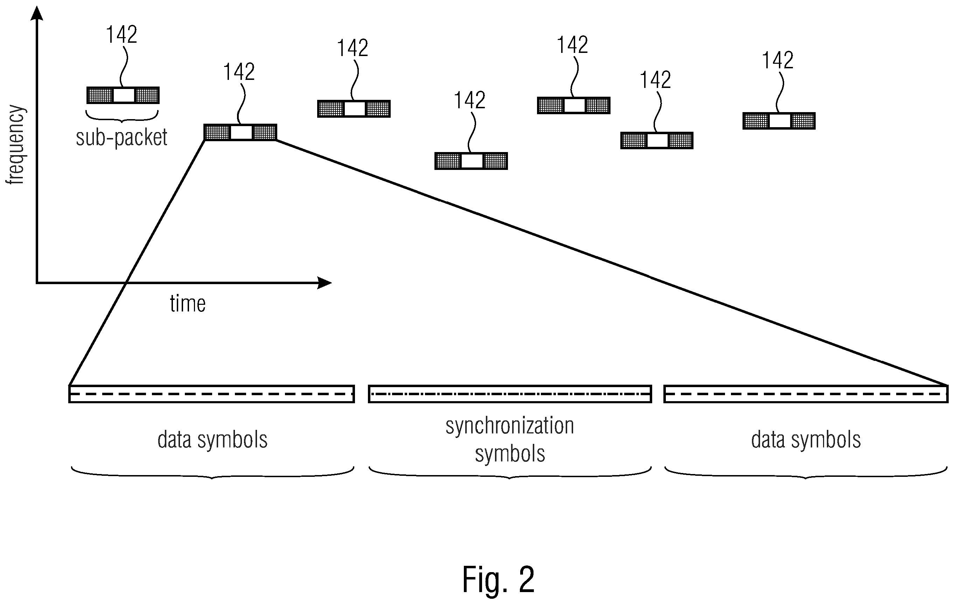

Fig. 2 shows in a diagram an occupancy of a radio channel when a plurality of sub-packets 142 are transmitting according to a time and frequency hopping pattern 140. Thereby, in Fig. 2 the ordinate describes the frequency and the abscissa describes time. In Fig. 2 it is exemplarity assumed that the original data packet is split up, for example, into seven sub-packets 142 that are transmitted distributed in time and frequency according to the time and frequency hopping pattern 140. The sub-packets 142 can comprise synchronization symbols and data symbols.

In embodiments, the wireless communication system 100 can be, for example, a low power wide area network, LPWAN. Thus, in embodiments, the data transceiver described herein may be implemented in an LPWAN system, such as a LPWAN system that is based on [1], or in any other wireless communication system which communicates in a an unlicensed frequency band, such as, for example, the ISM band (ISM = industrial, scientific and medical), in which several uncoordinated wireless communication systems compete for the same radio resources.

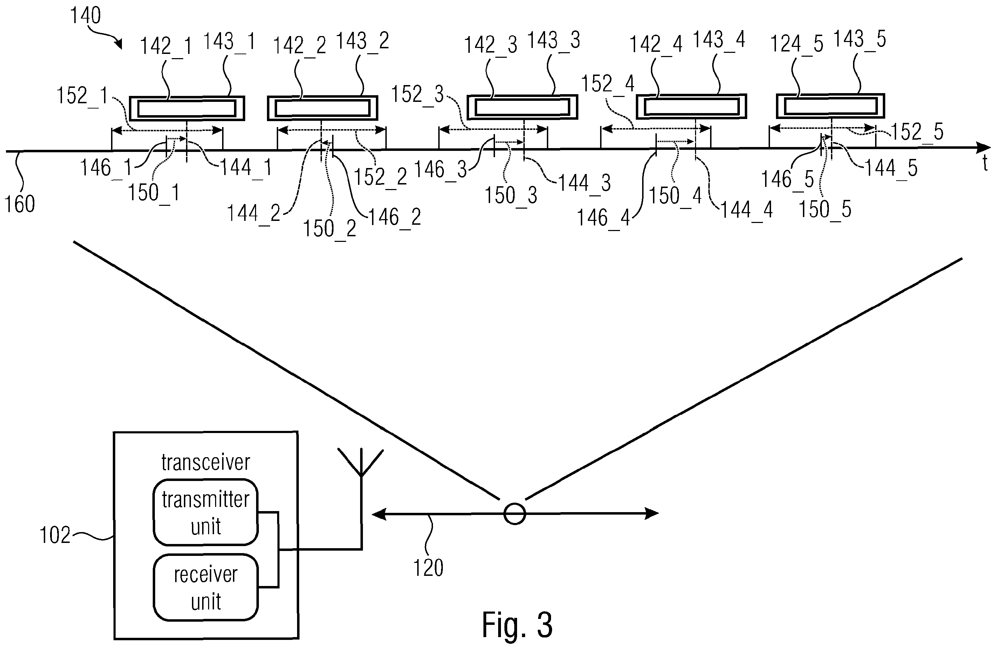

Fig. 3 shows a schematic block diagram of a transceiver 102, according to an embodiment of the present invention. The transceiver 102 is configured to transmit and/or receive data (e.g., a telegram or data packet) using a hopping pattern 140, the hopping pattern 140 defining a sequence of time instants 144_1-144_I (I=5) relative to a periodic grid 160. Thereby, in Fig. 3 it is exemplarily assumed that the sequence of time instants comprises I=5 time instants 144_1-144_I. However, the present invention is not limited to such embodiments. Rather, the sequence of time instants 144_1-144_I can comprise up to I time instants, wherein I is a natural number equal to or greater than 3, such as 5, 10, 20, 30, 50, 100, etc.

In embodiments, the transceiver 102 can be configured to determine the time instants 144_1-144_I (I=5) relative to respective grid positions 146_1-146_1 (I=5) of the periodic grid 160 directly. Alternatively, the transceiver 102 can be configured to determine the time instants 144_1-144_I (I=5) relative to the respective grid positions 146_1-146_I (I=5) of the periodic grid 160 by determining pseudo-random time offsets 150_1-150_I (I=5) between the time instants 144_1-144_I (I=5) and the respective grid positions 146_1-146_I (I=5), e.g., a first pseudo-random time-offset 150_1 between a first time instant 144_1 and a first grid position 146_1, a second pseudo-random time offset 150_2 between a second time instant 144_2 and a second grid position 146_2, and a I-th pseudo-random time-offset 150_I between a I-th time instant 144_I and a I-th grid position 146_I.

In embodiments, the transceiver 102 can be configured to determine the time instants 144_1-144_I (I=5) and/or the time offsets 150_I-150_I (I=5) such that the time instants 144_1-144_I (I=5) lie within respective time ranges (or time offset ranges) 152_1-152_I (I=5) defined by a time offset limiting function. The time offset limiting function defines a maximum allowed distance/offset of a respective time instant of the hopping pattern 142 towards a respective grid position of the periodic grid 160.

In embodiments, the time instants 144_1-144_I (I=5) can define respective slots 143_1-143_I (I=5) that can be used by the transceiver 102 for transmitting/receiving data. Thereby, a predefined position of the slots 143_1-143_I (I=5), such as a start, center or end, may coincide with the respective time instants 144_1-144_I (I=5).

In embodiments, the transceiver 102 can be configured to transmit/receive the data using telegram spiting, e.g., the transceiver 102 can be configured to split the data (e.g., a telegram or data packet) into a plurality of sup-packets 142_1-142_k (k=5) and to transmit the plurality of sup-packets 142_1-142_k (k=5) at the respective time instants 144_1-144_5 defined by the hopping pattern 140, e.g., a first sub-packet 142_1 at the first time instant 144_1, a second sub-packet 142_2 at a second time instant, and a k-th sub-packet at a k-th time instant, or to receive the plurality of sup-packets 142_1-142_k (k=5) at the respective time instants 144_1-144_5 defined by the hopping pattern 140. Thereby, a predefined position of a sup-packet, such as a start, center or end, may coincide with the respective time instant. In Fig. 3 it is exemplarily assumed that the data is splitted into k=5 sup-packets. However, the present invention is not limited to such embodiments. Rather, the data can be splitted into k sub-packets 142_1-142_k, where k is a natural number equal to or greater than 3, such as 5, 10, 18, 20, 24 or 30. Moreover, several data transmissions can be performed using the sequence of time instants 144_1-144_I, such as a first data transmission using a first group of time instants (e.g., time instants 144_1-144_k for a first data transmission consisting of k sup-packets), and a second data transmission using a second group of time instants (e.g., time instants 144_k+1-144_2k for a second data transmission consisting of k sup-packets).

Embodiments described herein focus on the generation of the time hopping pattern. Thereby, the time hopping pattern generated according to embodiments can be combined with any frequency hopping pattern, such as the frequency hopping pattern defined in [1], in order to obtain a time and frequency hopping pattern.

Subsequently, embodiments of the present invention are described in further detail.

In embodiments, the start times of sub-packet transmission slots are distributed in a pseudo-random fashion. Within a wireless network, these instants can be scheduled, for example, by a base station. In embodiments, the time slots are distinct for each network in order to avoid sub-packet collisions, when users receive signals from multiple base stations. In embodiments, the system's performance is independent of the base stations' relative time offsets, as synchronizing the networks is not performed. In embodiments, the time slots are approximately uniformly distributed over the entire time domain. In embodiments, burst collisions caused by the interference with other networks are reduced by a low correlation between consecutive start times.

In embodiments, a minimum pause between two consecutive sub-packets is guaranteed, which ensures sufficient processing time and enables additional transmissions in between the regular sub-packets. In embodiments, an upper bound on the pause between two consecutive sub-packets is provided, in order to limit the system's worst-case latency. For a practical application, in embodiments, the absolute positions of the individual sub-packets are computable by other network users with reduced effort.

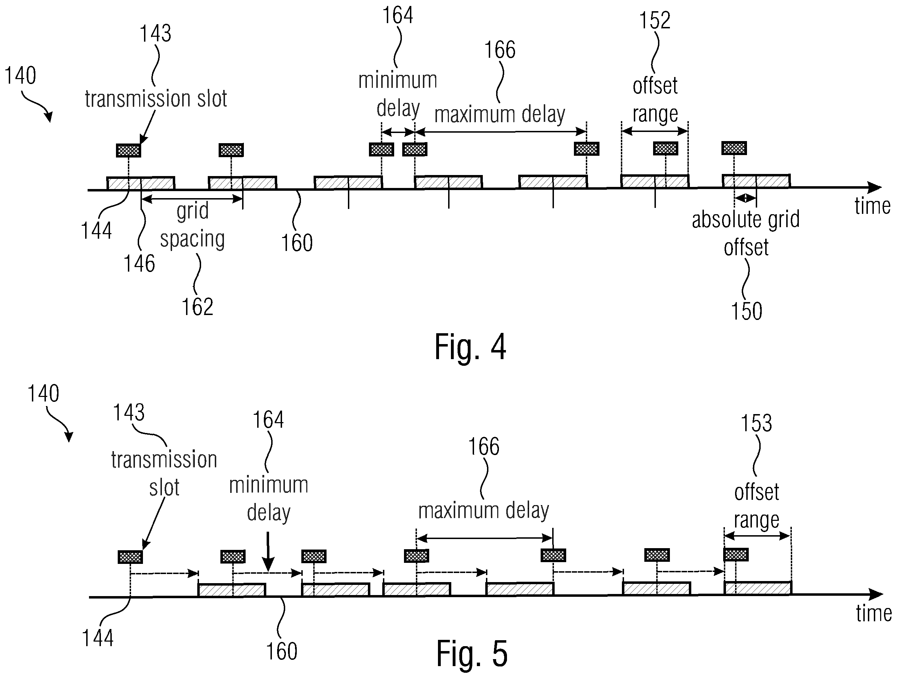

Fig. 4 shows in a diagram a sequence of transmission time instants 144 relative to a periodic grid 160, wherein the transmission time instants 144 are obtained by determining pseudo-random time offsets 150 between the transmission time instants 144 and respective grid positions of the periodic grid considering maximum allowed time offset ranges 152 around the respective grid positions 146. In other words, Fig. 4 shows in a diagram a transmission slot 143 scheduling with pseudo-random offset relative to a grid 160. Thereby, in Fig. 4 reference numeral 140 denotes the hoping pattern, reference numeral 143 denotes the transmission slots, reference numeral 146 denotes the grid positions of the periodic grid 160, reference numeral 162 denotes a spacing between subsequent grid positions 146, reference numeral 150 denotes an offset between a respective time instant 144 of the sequence of time instants and a respective grid position 146 of the periodic grid 160, reference numeral 152 denotes a time offset range that defines a maximum allowed offset between a respective time instant and a respective grid position of the periodic grid 160, reference numeral 164 denotes a minimum delay (or distance) between immediately subsequent time instants 144 of the sequence of time instants, reference numeral 166 denotes a maximum delay (or distance) between immediately subsequent time instants 144 of the sequence of time instants.

As indicated in Fig. 4, the transmission instants 144 can be determined by adding a random offset 150 to the grid positions 146 of a uniformly spaced time grid 160. If this offset 150 is bound to a period less than the grid spacing 162, this meets the demand for a minimum duration (or distance) 164 and maximum duration (or distance) 166 between consecutive time instants (e.g., between predefined positions (e.g., start, center or end) of consecutive sub-packets).

In Fig. 4, the offset's output range (or max. allowed time offset range) 152 denotes a design parameter that gives rise to a trade-off. A large output range 152 distributes the time instants 144 (e.g., sub-packet start times) over a large fraction of all possible time instants. In the limit, when the time offset range 152 equals the grid spacing, a transmission is possible over the entire time domain. Furthermore, for uniformly distributed time offsets 150, also all time instants 144 are equally likely. However, a large time offset range 152 reduces the minimum pause between consecutive sub-packets and increases its maximum. In the limit, when the time offset range 152 matches the grid spacing 162, no minimum time between consecutive sub-packets can be guaranteed.

Therefore, in embodiments, the start (or center or end) of a sub-packet is determined relative to the start (or center or end) of the previous sub-packet, as shown in Fig. 5.

In detail, Fig. 5 shows in a diagram a sequence of transmission time instants 144 obtained by determining time distances between immediately consecutive time instants of the sequence of time instants 144, wherein the time distances are pseudo-randomly distributed within time distance ranges 153 that are respectively defined by a predefined minimum time distance 164 and a predefined maximum time distance 166 towards an immediately preceding time instant 144 of the sequence of time instants. In other words, Fig. 5 shows in a diagram a relative transmission slot scheduling with pseudo-random offset relative to the preceding slot. Thereby, in Fig. 5 reference numeral 140 denotes the hoping pattern, reference numeral 143 denotes the transmission slots, reference numeral 144 denotes the time instants of the sequence of time instants, reference numeral 146 denotes the grid positions of the periodic grid 160, reference numeral 153 denotes a time distance range that is defined by a predefined minimum time distance 164 and a predefined maximum time distance 166 towards an immediately preceding time instant, reference numeral 164 denotes a minimum delay between immediately subsequent time instants 144 of the sequence of time instants, reference numeral 166 denotes a maximum delay between immediately subsequent time instants 144 of the sequence of time instants.

As shown in Fig. 5, the time differences (e.g., between subsequent transmission time instants 144) can be pseudo-randomly distributed between a minimum value 164 and maximum value 166. With this approach, every time instant 144 may generally be the start (or center or end) of a transmission slot 143, which avoids the need for synchronization among users.

In embodiments, transmission slots are pseudo-randomly distributed relative to their previous instants.

However, in its pure form, this approach exhibits two main limitations. While the mean delay (or distance) between consecutive time instants (or bursts) is determined by the pseudo-random offsets' distribution, the sampled average delay of several sub-packets may vary drastically. This affects the maximum delay of a fragmented packet transmission, which is mitigated by the enhancement proposed in section 1 below. As the absolute start time of each sub-packet depends on all previous delays, the entire history of the pseudo-random offsets has to be known and accumulated. In order to reduce the computational effort of initial synchronization and tracking, section 2 below introduces additional enhancements that periodically allow for a synchronization independent of previous delays.

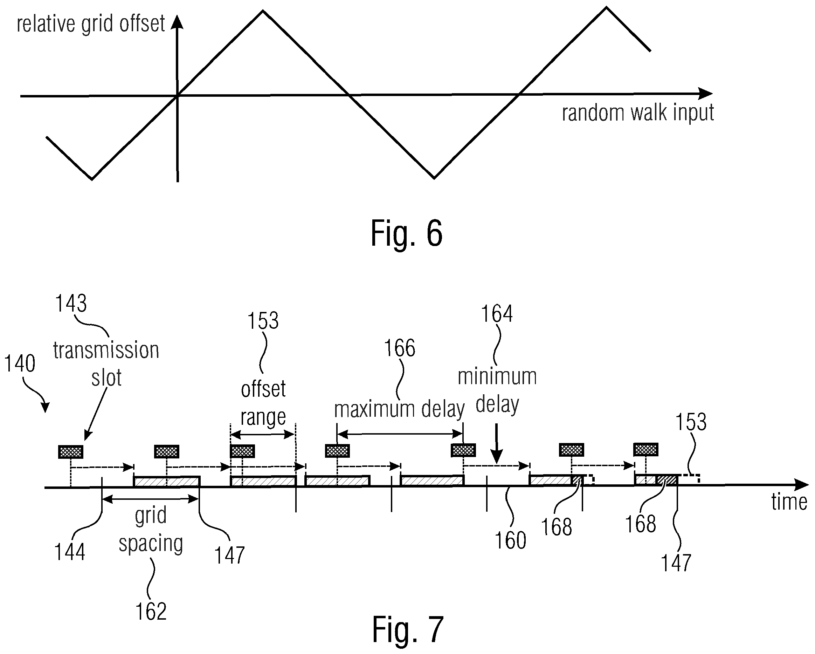

Thereby, in embodiments, the transceiver (cf. Fig. 3) can be configured to determine (e.g., generate or calculate) the hopping pattern 140 by determining, using a first determination constraint (or first determination function) and a second determination constraint (or second determination function), time distances between immediately consecutive time instants of the sequence of time instants, as described below making reference to Figs. 7 to 13.

## 1. Reflected random walk

In order to limit the system's maximum latency for transmissions employing multiple slots, in embodiments, the relative distance with respect to a uniformly spaced time grid 160 is further limited. This is done by mapping the accumulated time offsets to a continuous and cyclic representation of the time offsets relative to the grid, as shown in Fig. 6. Specifically, Fig. 6 shows in a diagram a mapping of the cumulated random walk to the corresponding relative grid offsets.

Fig. 7 illustrates the resulting slot scheduling, where the cyclic mapping may lead to a reflection of the offset range 153 on the grid border 147, effectively doubling the probability distribution for these instants. Specifically, Fig. 7 shows in a diagram a sequence of transmission time instants 144 obtained by determining time distances between immediately consecutive time instants of the sequence of time instants 144, wherein the time distances are pseudo-randomly distributed within time distance ranges 153 that are respectively defined by a predefined minimum time distance 164 and a predefined maximum time distance 166 towards an immediately preceding time instant. Thereby, the time distance ranges 153 are constraint (areas 168 in Fig. 7) by a time distance limiting function that defines a maximum allowed distance of a respective time instant 144 of the hopping pattern towards a respective grid position of the periodic grid. In other words, Fig. 7 shows in a diagram relative transmission slot scheduling with pseudo-random offset relative to the preceding slot and reflection at the grid borders. Thereby, in Fig. 7 reference numeral 140 denotes the hoping pattern, reference numeral 144 denotes the transmission time instants, reference numeral 143 denotes the transmission slots, reference numeral 147 denotes the grid boarder of the periodic grid 160 (i.e. center between subsequent grid positions when compared to Fig. 4), reference numeral 153 denotes a time range that is defined by a predefined minimum time distance 164 and a predefined maximum time distance 166 towards an immediately preceding time instant, reference numeral 164 denotes a minimum delay between immediately subsequent time instants 144 of the sequence of time instants, reference numeral 166 denotes a maximum delay between immediately subsequent time instants 144 of the sequence of time instants, reference numeral 168 denotes an area of a time distance range with twice the probability that compensates for the part 153 that is not allowed according to a time-distance limiting function, such as the function shown in Fig. 6, in order to preserve a uniform distribution of the time instants 144.

In embodiments, a cyclic and continuous mapping of integers to a limited range is performed, which preserves uniform distribution.

## 2. Block Based Reflected Random Walk

The start time of a transmission slot can be defined in terms of the sum of all preceding pseudo-random time offsets. In order to simplify the user's synchronization to the time hopping pattern, in embodiments, consecutive packets are grouped into blocks. A synchronization to the system is then possible independently for each block, without considering the previous states.

In embodiments, the transmission slot sequence (or sequence of transmission time instants) is portioned into blocks that allow for independent synchronization.

## 2.1 Reflected Random Walk with Hard Return

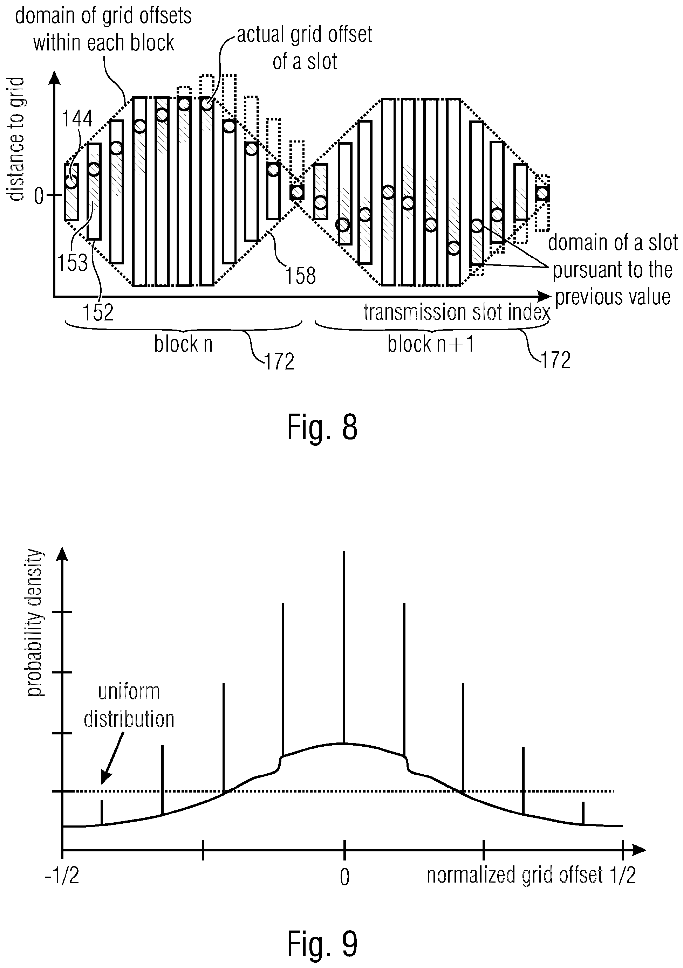

In embodiments, the synchronization in the beginning of each block can be simplified by starting relative to a fixed offset on the first slot of each block. Thus, the previously accumulated time offset may be neglected. In order to ensure that the minimum and maximum time offsets between consecutive slots are not exceeded at the block boundary, the final sub-packets of each block can be constrained. This is illustrated by Fig. 8.

Specifically, Fig. 8 shows in a diagram two blocks 172 of time instants 144 of a sequence of time instants defined by time offsets between the transmission time instants 144 and respective grid positions. Thereby, the ordinate denotes the distance/offset of a respective time instant to the respective grid position, where the abscissa denotes the transmission time instant (or transmission slot) indexes. As shown in Fig. 8, each transmission time instant 144 can be pseudo-randomly distributed within a time distance/offset range 153 that is defined by a predefined maximum time distance and a predefined minimum time distance with respect to an immediately preceding time instant of the sequence of time instants. As further indicated in Fig. 8, the time distance/offset ranges 153 are only allowed to lie within respective maximum allowed time offset ranges 152, each maximum allowed time offset range 152 defining a maximum allowed distance/offset of a respective time instant towards a respective grid position of the periodic grid 160. The maximum allowed time offset range 152 can be defined by a time distance/offset limiting function 158, where the maximum allowed time offset ranges 152 are confined to a predefined offset at a beginning and end of respective block 172 of time instants. In other words, Fig. 8 shows in a diagram a grid distance of selected slots from two blocks with their global domain and the possible offsets depending on the previous values shown for a reflected random walk with hard return.

As already mentioned, in embodiments, in order to ensure that the minimum and maximum time offsets (or differences) between consecutive slots are not exceeded at the block 172 boundary, the final time instants (or sub-packets) of each block 172 can be constrained. In Fig. 8 this is done by returning to a default state on the last time slot of a block 172. The previous slots are then restricted to the positions from where the transition to the final state is possible without violating the minimum or maximum delay between two sub-packets. Random walks outside of the compliant range are mapped on the closest position within the range. This can be done, for example, using a minimum and maximum operation.

Fig. 9 shows the resulting probability density function of the time offset relative to the grid, normalized by the grid spacing, for the reflected random walk with hard return. Further, in Fig. 9, the ideal uniform distribution, which is achieved by the (reflected) random walk, is shown for comparison. Thereby, in Fig. 9 the ordinate denotes the probability density, where the abscissa denotes the normalized offset to the grid positions. In Fig. 9, time offsets close to the grid center are more likely compared to the edges, and discrete probability spikes exist. This may lead to a time offset dependent performance for interfering networks.

In embodiments, it is returned to a fixed state at the end of each block (of time instants of the sequence of time instants) to allow for simple synchronization at the start of the next block (of time instants).

In embodiments, the range of the last slots in a block is limited to return to a default state in the last time slot of a block without violating the minimum and maximum offset constraints

## 2.2 Reflected Random Walk with Hard Partial Return

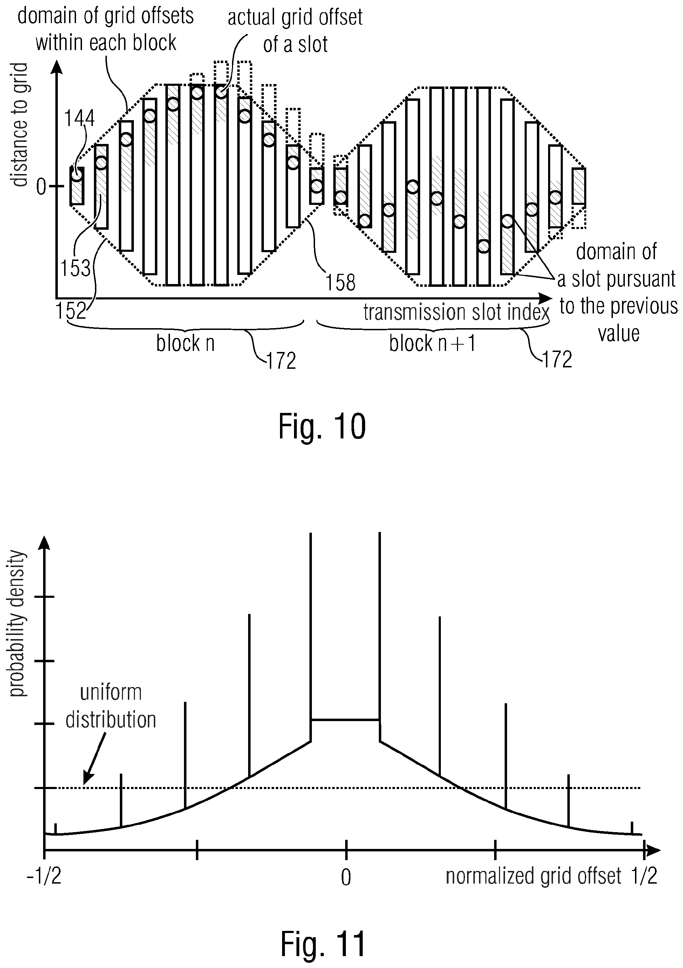

Alternative to the previous embodiment, where it is returned to a single final state (at the end of each block), in embodiments, each block's final time slot is allowed to vary within a restricted range, while also the first slot's random offset is limited for each block. In embodiments, these limitations are chosen such that the minimum and maximum delay constraints are met. This is illustrated in Fig. 10.

Specifically, Fig. 10 shows in a diagram two blocks 172 of time instants 144 of a sequence of time instants defined by time offsets between the transmission time instants 144 and respective grid positions. Thereby, the ordinate denotes the distance/offset of a respective time instant to the respective grid position, where the abscissa denotes the transmission time instant (or transmission slot) indexes. As shown in Fig. 10, each transmission time instant 144 can be pseudo-randomly distributed within a time distance/offset range 153 that is defined by a predefined maximum time distance and a predefined minimum time distance with respect to an immediately preceding time instant of the sequence of time instants. As further indicated in Fig. 10, the time distance/offset ranges 153 are only allowed to lie within respective maximum allowed time offset ranges 152, each maximum allowed time offset range 152 defining a maximum allowed distance/offset of a respective time instant towards a respective grid position of the periodic grid. The maximum allowed time offset ranges 152 can be defined by a time distance / offset limiting function 158, where the time offset ranges 152 are confined to a predefined offset range at a beginning and/or end of respective block 172 of time instants. In other words, Fig. 10 shows in a diagram a grid distance of selected slots from two blocks with their global domain and the possible offsets depending on the previous values shown for a reflected random walk with hard partial return.

Fig. 11 shows the resulting probability density function of the time offset relative to the grid, normalized by the grid spacing, for the reflected random walk with hard partial return. Further, in Fig. 11, the ideal uniform distribution, which is achieved by the (reflected) random walk, is shown for comparison. Thereby, in Fig. 11 the ordinate denotes the probability density, where the abscissa denotes the normalized offset to the grid positions. The general shape of the probability density function of Fig. 11 is similar to the probability density function of Fig. 9 (hard return), although it avoids the major probability spike at the grid center.

In embodiments, the valid range at the start and end of each block is restricted to enable independent random walks per block and meet the minimum and maximum offset requirements.

2.3 Reflected Random Walk with Reversed Return

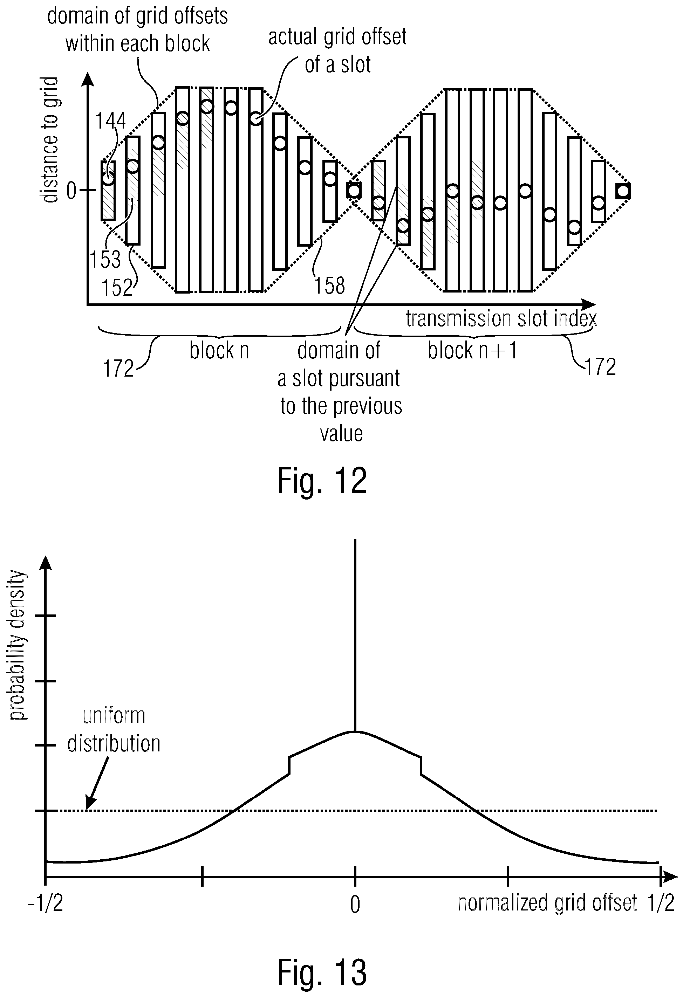

The range restriction using the minimum and maximum operation leads to peaks in the temporal slot distribution at the end of each block. By reusing the pseudo-random offset sequence of each block's first half in the second half in reversed direction, this may be avoided. However, this reduces the number of independent random steps and thus increases the chance of burst collisions. Furthermore, this approach still leads to a spectral spike for the final slot of each block. This is illustrated in Fig 12.

Specifically, Fig. 12 shows in a diagram two blocks 172 of time instants 144 of a sequence of time instants defined by time offsets between the transmission time instants 144 and respective grid positions. Thereby, the ordinate denotes the distance/offset of a respective time instant to the respective grid position, where the abscissa denotes the transmission time instant (or transmission slot) indexes. As shown in Fig. 12, each transmission time instant 144 can be pseudo-randomly distributed within a time distance/offset range 153 that is defined by a predefined maximum time distance and a predefined minimum time distance with respect to an immediately preceding time instant. As further indicated in Fig. 12, the time distance/offset ranges 153 are only allowed to lie within respective maximum allowed time offset ranges 152, each maximum allowed time offset range 152 defining a maximum allowed distance/offset of a respective time instant towards a respective grid position of the periodic grid. The maximum allowed time offset ranges 152 can be defined by a time distance/offset limiting function 158, where the maximum allowed time offset ranges 152 are confined to a predefined offset range at a beginning and/or end of respective block 172 of time instants. In other words, Fig. 12 shows in a diagram grid distance of selected slots from two blocks with their global domain and the possible offsets depending on the previous values shown for a reflected random walk with reversed return.

Fig. 13 shows the resulting probability density function of the time offset relative to the grid, normalized by the grid spacing, for the reflected random walk with reversed return. Further, in Fig. 13, the ideal uniform distribution, which is achieved by the (reflected) random walk, is shown for comparison. Thereby, in Fig. 13 the ordinate denotes the probability density, where the abscissa denotes the normalized offset to the grid positions. In Fig. 13, only a single probability spike is present, which is caused by the return to the central position in the end of each block. Due to the fixed initial offset, time offsets close to the grid center are still more likely.

In embodiments, the random walk is started with respect to a reference point until half the block size and the previous steps is utilized in the second half, but in the inverted direction.

2.4 Windowed Reflected Random Walk

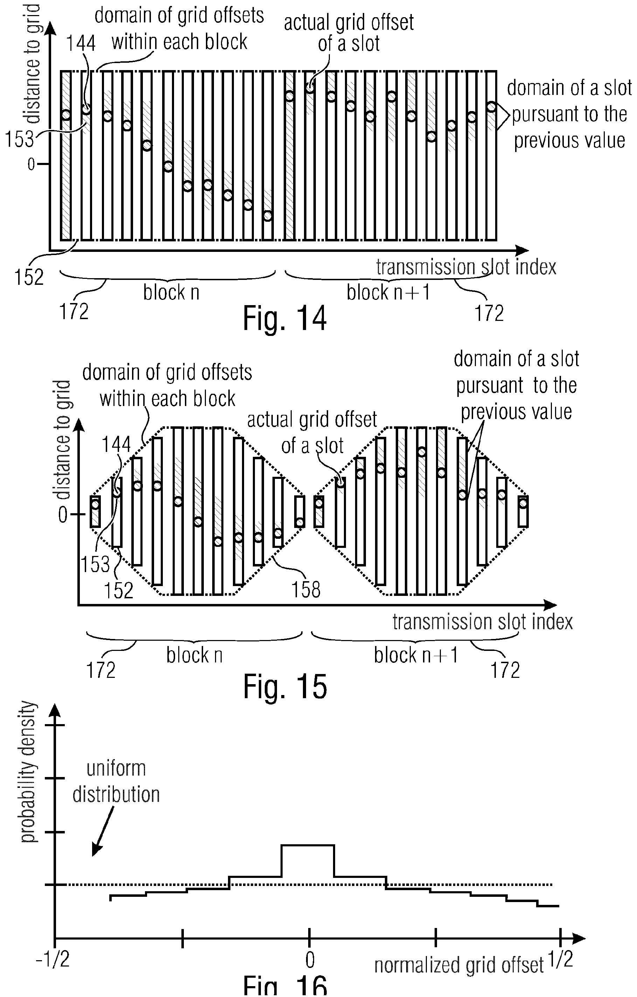

In embodiments, the transceiver (cf. Fig. 3) can be configured to determine (e.g., generate or calculate) the hopping pattern 140 by determining, using a first determination function and a second determination function, time offsets 150 between time instants 144 of at least a block of time instants of the sequence of time instants 144 and respective grid positions 146 of the periodic time grid 160. Thereby, the first determination function and the second determination function can be defined as described below making reference to Figs. 14 and 15 (or 17), respectively.

In embodiments, the windowed reflected random walk starts at an arbitrary absolute offset for the first slot of each block and then continues by adding the relative offsets to this position. This is illustrated by Fig. 14.

Specifically, Fig. 14 shows in a diagram two blocks 172 of time instants 144 of a sequence of time instants defined by time offsets between the transmission time instants 144 and respective grid positions before applying a window function. Thereby, the ordinate denotes the distance/offset of a respective time instant to the respective grid position, where the abscissa denotes the transmission time instant (or transmission slot) indexes. As shown in Fig. 14, the transmission time instants 144 are pseudo-randomly distributed (e.g., according to a first determination function) within time distance/offset ranges 153 that are defined, for a second time instant and each following time instant of the block of time instants 144, by a respective relative minimum time distance and relative maximum time difference with respect to an immediately preceding time instant, wherein the relative minimum time distances and relative maximum time distances are individually defined for the second and each following time instant of the block of time instants. Since the window function is applied afterwards in Fig. 15, in Fig. 14 the maximum time distance/offset ranges 152 still do not confine or limit the time distance/offset ranges. In other words, Fig. 14 shows in a diagram grid distance of selected slots from two blocks with their global domain and the possible offsets depending on the previous values shown for a reflected random walk prior to windowing.

The resulting absolute offsets relative to the grid are then windowed individually for each block, as shown in Figure 15.

In detail, Fig. 15 shows in a diagram the two blocks 172 of time instants 144 of a sequence of time instants defined by time offsets between the transmission time instants 144 and respective grid positions from Fig. 14 after applying a window function (e.g., according to a second determination function). Thereby, the ordinate denotes the distance/offset of a respective time instant to the respective grid position, where the abscissa denotes the transmission time instant (or transmission slot) indexes. As shown in Fig. 15, the time offsets defining the time instants 144, the time distance/offset ranges 153 and the maximum allowed time distance/offset ranges 152 are limited or confined by the window function. In other words, Fig. 15 shows in a diagram grid distance of selected slots from two blocks with their global domain and the possible offsets depending on the previous values shown for a reflected random walk after windowing.

In embodiments, the windowing function w is chosen such that the minimum and maximum time offsets between consecutive time slots are not exceeded, neither within a block nor at the boundary. As the stretching and squeezing of the slots absolute start positions introduces an additional relative time shift, the maximum allowed relative time shift has to be reduced to allow for this margin. It is also possible to set the maximum relative offset on a per sub-packet basis, in order to maximize the sequence as much as possible, as indicated by Fig. 14. At the block borders, the window width is chosen such that arbitrary transitions within these windows do not exceed the minimum and maximum delay. For the rising part of the window, the most extreme delays are experienced when the relative offset is at its maximum absolute value which then results in a maximum absolute grid distance. Thus, the windowing function and the relative offset ranges are chosen such that these extreme delays are still in the valid range. The falling part of the window may then be obtained by mirroring the rising part.

Fig. 16 shows the resulting probability density function of the time offset relative to the grid normalized by the grid spacing, for the windowed reflected random walk. Further, in Fig. 16, the ideal uniform distribution, which is achieved by the (reflected) random walk, is shown for comparison. Thereby, in Fig. 16 the ordinate denotes the probability density, where the abscissa denotes the normalized offset to the grid positions. In Fig. 16, while time offsets close to the grid center are still more likely, the distribution is flatter than for the previous methods and no spectral spikes are present. The staircase structure emerges is caused by the restricted ranges due to the windowing function.

An exemplarily implementation of this aspect is provided below in section 2.6, when $R_{DC}(n) = 0$ holds for all $n$.

In embodiments, time offsets cab distributed according to a random walk with varying step sizes and subsequent windowing that preserves the minimum and maximum delay constraints

### 2.5 Windowed Reflected Random Walk with Randomized Block Transition Offsets

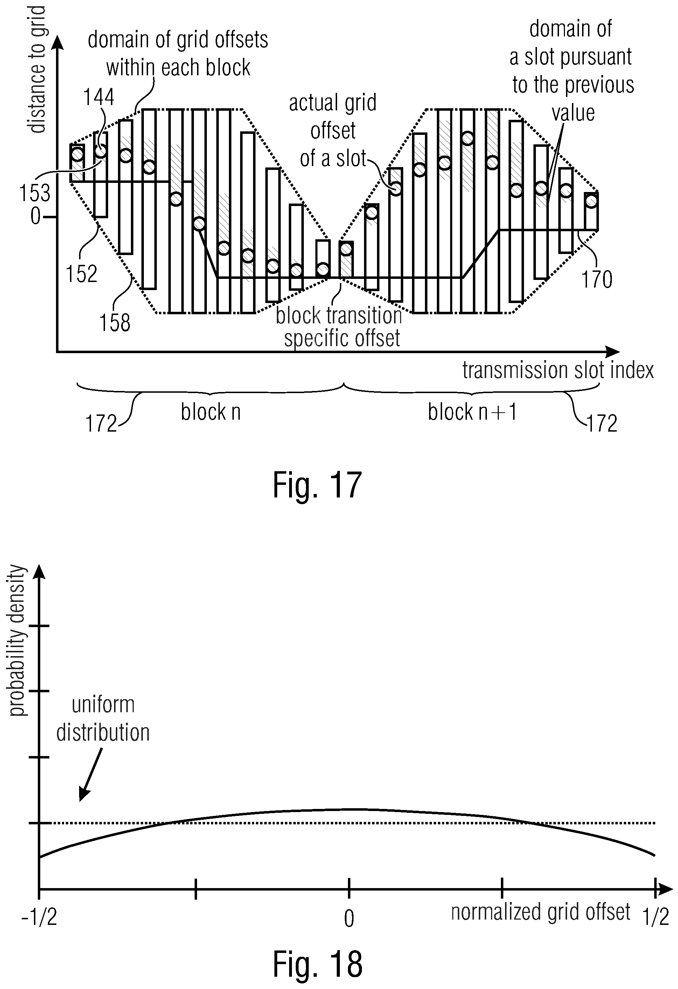

The narrow absolute offset range in the beginning and end of each block 172 still leads to an unequal distribution of the slots in the time domain. This can be mitigated by randomizing their absolute position for each block transition, as shown in Fig. 17.

Specifically, Fig. 17 shows in a diagram the two blocks 172 of time instants 144 of a sequence of time instants defined by time offsets between the transmission time instants 144 and respective grid positions from Fig. 15 after applying a window function (e.g., according to a second determination function) and an additional (static) offset 170 weighted by the additive inverse of the windowing function. Thereby, in Fig. 17 the ordinate denotes the distance/offset of a respective time instant to the respective grid position, where the abscissa denotes the transmission time instant (or transmission slot) indexes. When compared to Fig. 15, the additional (static) offset shown in Fig. 17 offsets the positions of the time instants 144 defined by the respective time offsets, especially at a beginning and end of a respective block 172 of time instants. In other words, Fig. 17 shows in a diagram grid distances of selected slots from two blocks with their global domain and the possible offsets depending on the previous values shown for a reflected random walk after windowing and including the block transmission offsets.

In embodiments, the introduced static offset requires an additional margin, which further reduces the relative offset range. The transition offset 170 is expected to change only in the center of each block 172, where the windowing function is maximal. In embodiments, the transition offset 170 can be pseudo-randomly derived from a sub-packet counter, that is offset, for example, by half the block length and subsequently integer divided by the block length. The static offset 170 contributes with the weight 1-w to the final grid offset, which is the inverse of the windowing function. Thus, there is a linear transition from the static offset 170 to the windowed reflected random walk. Here, the most extreme delays occur for a minimum static offset, when a maximum relative offset leads to a maximum absolute offset during the rising part of the window. The same is also true for a maximum static offset, when a minimum relative offset leads to a minimum absolute offset. Thus, in embodiments, the static offset range, the windowing function and the relative offset range are selected to meet the delay constraints for these instants. Furthermore, the falling part of the window may again be obtained through mirroring the rising part.

Fig. 18 shows the resulting probability density function of the time offset relative to the grid, normalized by the grid spacing, for the windowed reflected random walk with randomized block transition offsets. Further, in Fig. 18, the ideal uniform distribution, which is achieved by the (reflected) random walk, is shown for comparison. Thereby, in Fig. 18 the ordinate denotes the probability density, where the abscissa denotes the normalized offset to the grid positions. This smooth function is the closest to a uniform distribution of the proposed block based reflected random walks. Offsets close to the grid center remain more likely, as these values remain possible for most parts of any block transition.

In embodiments, a linear interpolation of the windowed random walk with a pseudo-random offset is performed that stays constant during the block transitions.

2.6 Specific Implementation of a Windowed Reflected Random Walk with Randomized Block Transition Offsets

In the following the computation of hopping pattern (e.g., base station specific hopping (BSSH) resource element pattern) is described. A 32-bit BSSH number according to Table 1 is composed of the 16-bit base station (BS) short address, which is typically unique and constant for each base station, and a 16-bit pseudo-random number consisting of the content of a 16-bit linear feedback shift register (LFSR).

**Table 1: BSSH number format (32-bit)**

| Bits: 0-15 | 16-31 |
|---|---|
| Pseudo-random number $R_b$ [0-15] | BS short address [0-15] |

$R_b(n)$ denotes the content of the linear feedback shift register for the $b$-th beacon period and the n-th resource element. The most significant bit (MSB) of the 32-bit number corresponds to bit index 0. At the beginning of each beacon period b the seed $s_b = R_b(0)$ of the linear feedback shift register shall be initialized according to

$$s_b = R_b(0) = \max\Big(\big(b * N_{RE,bea}\big)\text{modulo } 65536, 1\Big).$$

The basic operation of the 16-bit linear feedback shift register is defined as described in clause 6.4.7.1.6.2 of [1]. The polynomial for the Galois-LFSR in hexadecimal notation shall be 0xD09B (instead of 0xB4F3). For each resource element n in a beacon period the content of the shift register, which is directly mapped to the upper 16 bits of the BSSH number, is computed based on one shift operation of the linear feedback shift register, i.e.

$$R_b(n) = \text{LFSR}\big(R_b(n-1)\big), \quad n \in \big\{1,2,\dots,N_{RE,bea}-1\big\}$$

following the same notation as used in clause 6.4.7.1.6.2 of [1].

The applicable values for $N_{RBL,bea}$ (with $N_{RE,bea} = 36 * N_{RBL,bea}$), BS short address STS_SHORT_ADDR and the beacon period counter $b$ are signaled by the base station to the end-node during the synchronization procedure (e.g., within the sync info notify control segment).

The content of the 32-bit BSSH number can be pseudo-randomized by applying a 32-bit CRC operation to it, which is denoted as CRC32(...). The definition of the CRC calculation follows the notation in clause 6.4.6.2 of [1]. A CRC of length 32 bit shall be computed based on the polynomial 0x4C11DB7, the initial value for calculation is 0xFFFFFFFF, no XOR is applied.

$$BSSHF\_CRC = CRC32(BSSH\_counter).$$

The result is denoted as BSSHF_CRC (Table 2). The bits can be processed in ascending order and the unsigned integer CRC field shall be applied with the highest term (MSB) first.

**Table 2: BSSHF_CRC and BSSHT_CRC format**

| BSSHT_CRC: Bits 0-15 | Bits 16-31 |
|---|---|
| BSSHF_CRC [0-31] | |

The transmission time of the resource elements (RE) of the BSSH pattern is derived from the 16-bit unsigned integer number BSSHT_CRC, see Table 2. For resource element $n$, which denotes element $m = n$ modulo 36 within its resource block, the time offset $R_{RE}$ is generated from the pseudo random sequence

$$r(n) = \lfloor BSSHT\_CRC(n) * (2 * c(m) + 1)/2^{16} \rfloor - c(m), n \in \{0,1,2,\dots,N_{RE,bea} - 1\}$$

pursuant to the maximum values c(m) denoted in Table 4. This sequence is accumulated to

$$R_{RE}'(n) = \begin{cases} 2^{15} + r(n), & \text{for } m = 0 \\ (R_{RE}'(n-1) + r(n)) \text{ modulo } 2^{17}, & \text{else} \end{cases}$$

for each RB. According to the claimed invention, the final time offset

$$R_{RE}(n)$$
$$= \begin{cases} \lfloor (R_{RE}'^{(n)} * w(m) + R_{DC}(n) * (260 - w(m)) + 2^{15})/2^{16} \rfloor - 130, \text{ for } R_{RE}'(n) < 2^{16} \\ \lfloor ((2^{17} - 1 - R_{RE}'(n)) * w(m) + R_{DC}(n) * (260 - w(m)) + 2^{15})/2^{16} \rfloor - 130, \text{ for } R_{RE}'(n) \geq 2^{16} \end{cases}$$
$$R_{RE} \in \{-130, -129, \dots, +130\}$$

is then obtained through windowing by the function $w(m)$ denoted in Table 4, which governs the transition to the pseudo random offset $R_{DC}(n)$.

The offset $R_{DC}(n)$ is calculated analog to BSSHF_CRC from the CRC32 of a counter

$$R_E(n) = \lfloor \frac{n+18}{36} \rfloor \text{ modulo } 2^{16},$$

concatenated with the BS short address, as shown in Table 3.

**Table 3: BSSHE number format (32-bit)**

| Bits: 0-15 | 16-31 |
|---|---|
| Pseudo-random number $R_E$ [0-15] | BS short address [0-15] |

The CRC32 is then used to determine the uniform distributed offset

$$R_{DC}(n) = CRC32(BSSHE(R_E(n))) \text{ modulo } 2^{16}$$
$$R_{DC} \in \{0,1,\dots,2^{16} - 1\}$$

**Table 4: Time pattern step size c(m) and windowing function w(m)**

| m | 0 | 1 | 2 | 3 | 4 | 5 | 6 | 7 | 8 |
|---|---|---|---|---|---|---|---|---|---|
| c(m) | 32768 | 0 | 0 | 0 | 0 | 0 | 0 | 0 | 0 |

(continued)

| m | 0 | 1 | 2 | 3 | 4 | 5 | 6 | 7 | 8 |
|---|---|---|---|---|---|---|---|---|---|
| w(m) | 28 | 56 | 84 | 112 | 140 | 168 | 196 | 224 | 252 |

| m | 9 | 10 | 11 | 12 | 13 | 14 | 15 | 16 | 17 |
|---|---|---|---|---|---|---|---|---|---|
| c(m) | 5201 | 7057 | 7057 | 7057 | 7057 | 7057 | 7057 | 7057 | 7057 |
| w(m) | 260 | 260 | 260 | 260 | 260 | 260 | 260 | 260 | 260 |

| m | 18 | 19 | 20 | 21 | 22 | 23 | 24 | 25 | 26 |
|---|---|---|---|---|---|---|---|---|---|
| c(m) | 7057 | 7057 | 7057 | 7057 | 7057 | 7057 | 7057 | 7057 | 7057 |
| w(m) | 260 | 260 | 260 | 260 | 260 | 260 | 260 | 260 | 260 |

| m | 27 | 28 | 29 | 30 | 31 | 32 | 33 | 34 | 35 |
|---|---|---|---|---|---|---|---|---|---|
| c(m) | 5201 | 0 | 0 | 0 | 0 | 0 | 0 | 0 | 0 |
| w(m) | 252 | 224 | 196 | 168 | 140 | 112 | 84 | 56 | 28 |

The time difference $T_{RE}$ between the centres of two adjacent resource elements shall be calculated by:

$$T_{RE}(n) = \left(260 - R_{RE}(n-1) + R_{RE}(n)\right) * \Delta T_{symUL-ULP}, \quad n \in \{1,2,3,\dots,N_{RE}-1\},$$

with the symbol duration $\Delta T_{symUL-ULP}$ of the UL-ULP mode according to clauses 6.4.4.2.1 and 6.4.4.2.2 of [1]. It is guaranteed to lie in the range of $232 * \Delta T_{symUL-ULP} \le T_{RE} \le 288 * \Delta T_{symUL-ULP}$. For the first resource element in the beacon period the time $T_{RE}(1)$ denotes the delay between the middle of the first resource element with index $n = 0$ and the middle of the second resource element with index $n = 1$ of the beacon core frame, analogical to clause 6.4.7.1.4 of [1]. The start time $T_{0,DL-STS}$ of the beacon period is defined as the middle of the first resource element with index $n = 0$ in the beacon core frame.

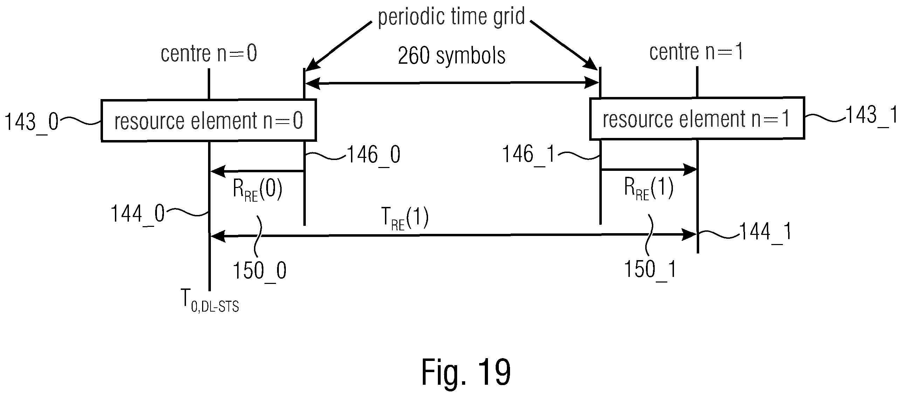

Fig. 19 shows a schematic illustration of a definition of time differences difference $T_{RE}(n)$ between two resource elements 143_0 and 143_1. As shown in Fig. 19, positions (e.g., centers) of the resource elements 143_0 and 143_1 can be defined by time instants 144_0 and 144_1. Time instants 144_0 and 144_1 can be defined by respective time offsets 150_0 ($R_{RE}(0)$) and 150_1 ($R_{RE}(1)$) with respect to respective grid positions 146_0 and 146_1 of a periodic grid having a periodicity of, for example, 260 symbols between consecutive grid positions. A distance between consecutive time instants 144_0 and 144_1 can be defined by $T_{RE}(1)$.

3. Further embodiments

Although some aspects have been described in the context of an apparatus, it is understood that these aspects also represent a description of the corresponding method so that a block or component of an apparatus is also to be understood to be a corresponding method step or feature of a method step. In analogy, aspects described in connection with or as a method step also represent a description of a corresponding block or detail or feature of a corresponding apparatus. Some or all of the method steps may be performed by (or using) a hardware apparatus, such as a microprocessor, a programmable computer, or an electronic circuit. In some embodiments, some or more of the most important method steps may be performed by such an apparatus.

Depending on particular implementation requirements, embodiments of the invention may be implemented in hardware or in software. The implementation may be performed using a digital storage medium, for example a floppy disk, a DVD, Blu-ray disc, CD, ROM, PROM, EPROM, EEPROM, or FLASH memory, a hard disk, or any other magnetic or optical storage which has stored thereon electronically readable control signals which can or do interact with a programmable computer system so as to perform the respective method. Therefore, the digital storage medium may be computer-readable.

Thus, some embodiments according to the invention include a data carrier having electronically readable control signals capable of cooperating with a programmable computer system such that any of the methods described herein is performed.

Generally, embodiments of the present invention may be implemented as a computer program product having program code, the program code being operative to perform any of the methods when the computer program product runs on a computer.

For example, the program code may also be stored on a machine-readable carrier.

Other embodiments include the computer program for performing any of the methods described herein, wherein the computer program is stored on a machine-readable carrier.

In other words, an embodiment of the inventive method is thus a computer program comprising program code for performing any of the methods described herein when the computer program runs on a computer.

Thus, another embodiment of the inventive methods is a data carrier (or digital storage medium or computer-readable medium) on which the computer program for performing any of the methods described herein is recorded. The data carrier, digital storage medium, or computer-readable medium is typically tangible and/or non-transitory or non-transient.

Thus, a further embodiment of the inventive method is a data stream or sequence of signals constituting the computer program for performing any of the methods described herein. The data stream or sequence of signals may, for example, be configured to be transferred via a data communication link, for example via the Internet.

Another embodiment comprises processing means, such as a computer or programmable logic device, configured or adapted to perform any of the methods described herein.

Another embodiment includes a computer having installed thereon the computer program for performing any of the methods described herein.

Another embodiment according to the invention comprises an apparatus or system configured to transmit a computer program for performing at least one of the methods described herein to a receiver. The transmission may, for example, be electronic or optical. The receiver may be, for example, a computer, mobile device, storage device, or similar device. The apparatus or system may include, for example, a file server for transmitting the computer program to the receiver.

In some embodiments, a programmable logic device (for example, a field programmable gate array, FPGA) may be used to perform some or all of the functionalities of the methods described herein. In some embodiments, a field programmable gate array may cooperate with a microprocessor to perform any of the methods described herein. In general, in some embodiments, the methods are performed on the part of any hardware apparatus. This may be general-purpose hardware such as a computer processor (CPU), or hardware specific to the method, such as an ASIC.

The apparatus described herein may be implemented using, for example, a hardware apparatus, or using a computer, or using a combination of a hardware apparatus and a computer.

The apparatus described herein, or any components of the apparatus described herein, may be implemented at least partly in hardware and/or in software (computer program).

For example, the methods described herein may be implemented using a hardware apparatus, or using a computer, or using a combination of a hardware apparatus and a computer.

The methods described herein, or any components of the methods described herein, may be performed at least partly by hardware and/or by software.

The above described embodiments are merely illustrative of the principles of the present invention. It is understood that modifications and variations of the arrangements and details described herein will be apparent to others skilled in the art. Therefore, the invention is intended to be limited solely by the scope of the claims below and not by the specific details presented herein by way of the description and explanation of the embodiments.

Bibliography

[1] ETSI TS 103 357, Low Throughput Networks, v.1.1.1, June 2018.

**Claims**

1. Transceiver (102) of a wireless communication network,

   wherein the transceiver (102) is configured to transmit and/or receive data using a hopping pattern (140),
   wherein the transceiver (102) is configured to determine an n-th time instant of the hopping pattern (140) based on the following formula:

$$R_{RE}(n) =$$

$$\begin{cases} \left\lfloor \left(R_{RE}{'}(n) * w(m) + R_{DC}(n) * \left(260 - w(m)\right) + 2^{15}\right)/2^{16} \right\rfloor - 130, \text{ for } R_{RE}{'}(n) < 2^{16} \\ \left\lfloor \left(\left(2^{17} - 1 - R_{RE}{'}(n)\right) * w(m) + R_{DC}(n) * \left(260 - w(m)\right) + 2^{15}\right)/2^{16} \right\rfloor - 130, \text{ for } R_{RE}{'}(n) \geq 2^{16} \end{cases}$$

wherein $R_{RE}(n)$ describes a pseudo-random time offset with respect to a respective position of a periodic time grid having a periodic spacing of 260 symbols,
wherein $R_{RE}{'}(n)$ describes a sequence of pseudo-random time offsets,
wherein $n$ is a natural number,
wherein $m = n$ *modulo* 36,
wherein $w(m)$ describes a window function,
wherein $R_{DC}(n)$ describes an pseudo-random offset and $R_{DC} \in \{0,1,..., 2^{16}\text{-}1\}$.

2. Transceiver (102) as claimed in claim 1,

   wherein the $R_{RE}{'}(n)$

$$R_{RE}{'}(n) = \begin{cases} 2^{15} + r(n), & \text{for } m = 0 \\ \left(R_{RE}{'}(n-1) + r(n)\right) \text{ modulo } 2^{17}, & \text{else} \end{cases}$$

   wherein $r(n)$ is a pseudorandom sequence.

3. Transceiver (102) as claimed in claim 2,

   wherein transceiver (102) is configured to determine the pseudorandom sequence $r(n)$ based on the following formula:

$$r(\mathrm{n}) = \lfloor \mathrm{BSSHT\_CRC}(n) * (2 * c(m) + 1)/2^{16} \rfloor - c(m), \mathrm{n} \in \left\{0,1,2, ..., N_{RE,bea} - 1\right\}$$

   wherein BSSHT_CRC(n) is a pseudo-random number that depends on an ID of a base station and the n-th time instant, or a respective part thereof,
   wherein $c(m)$ is a time pattern step size,
   wherein $N_{RE,bea}$ describes a number of elements after which a calculation of BSSHT_CRC(n) has to be recalculated.

4. Transceiver (102) as claimed in claim 3,
   wherein the transceiver (102) is configured to determine the step size $c(m)$ based on the following table in dependence on m:

| $m$ | 0 | 1 | 2 | 3 | 4 | 5 | 6 | 7 | 8 |
|---|---|---|---|---|---|---|---|---|---|
| $c(m)$ | 32768 | 0 | 0 | 0 | 0 | 0 | 0 | 0 | 0 |

| $m$ | 9 | 10 | 11 | 12 | 13 | 14 | 15 | 16 | 17 |
|---|---|---|---|---|---|---|---|---|---|
| $c(m)$ | 5201 | 7057 | 7057 | 7057 | 7057 | 7057 | 7057 | 7057 | 7057 |

| $m$ | 18 | 19 | 20 | 21 | 22 | 23 | 24 | 25 | 26 |
|---|---|---|---|---|---|---|---|---|---|
| $c(m)$ | 7057 | 7057 | 7057 | 7057 | 7057 | 7057 | 7057 | 7057 | 7057 |

| $m$ | 27 | 28 | 29 | 30 | 31 | 32 | 33 | 34 | 35 |
|---|---|---|---|---|---|---|---|---|---|
| $c(m)$ | 5201 | 0 | 0 | 0 | 0 | 0 | 0 | 0 | 0 |

5. Transceiver (102) as claimed in any of claims 1 to 4,
wherein the transceiver (102) is configured to determine the window function w(m) based on the following table in dependence on m:

| $m$ | 0 | 1 | 2 | 3 | 4 | 5 | 6 | 7 | 8 |
|---|---|---|---|---|---|---|---|---|---|
| $w(m)$ | 28 | 56 | 84 | 112 | 140 | 168 | 196 | 224 | 252 |

| $m$ | 9 | 10 | 11 | 12 | 13 | 14 | 15 | 16 | 17 |
|---|---|---|---|---|---|---|---|---|---|
| $w(m)$ | 260 | 260 | 260 | 260 | 260 | 260 | 260 | 260 | 260 |

| $m$ | 18 | 19 | 20 | 21 | 22 | 23 | 24 | 25 | 26 |
|---|---|---|---|---|---|---|---|---|---|
| $w(m)$ | 260 | 260 | 260 | 260 | 260 | 260 | 260 | 260 | 260 |

| $m$ | 27 | 28 | 29 | 30 | 31 | 32 | 33 | 34 | 35 |
|---|---|---|---|---|---|---|---|---|---|
| $w(m)$ | 252 | 224 | 196 | 168 | 140 | 112 | 84 | 56 | 28 |

6. Transceiver (102) as claimed in any of claims 1 to 5,

wherein the transceiver (102) is configured to determine the pseudo-random offset $R_{DC}(n)$ based on the following formula:

$$R_{DC}(n) = CRC32(BSSHE(R_E(n))) \text{ modulo } 2^{16}$$

wherein CRC32 is a 32-bit cyclic redundancy check,

wherein $R_E(n) = \left\lfloor \frac{n+18}{36} \right\rfloor \text{ modulo } 2^{16}$,

wherein $BSSHE$ is a combined number resulting from a combination of $R_E(n)$ and a short address of the base station.

7. Transceiver (102) as claimed in any of claims 1 to 6,

wherein the transceiver (102) is configured to determine a time difference between immediately subsequent hops of the hopping pattern (140) based on the following formula:

$$T_{RE}(\text{n}) = \big(260 - R_{RE}(\text{n}-1) + R_{RE}(\text{n})\big) * \Delta T_{sym_{UL-ULP}}, \quad \text{n} \in \{1,2,3,\dots,\text{N}_{RE}-1\},$$

wherein $\Delta T_{symUL-ULP}$ is a symbol duration,
wherein $\text{N}_{RE}$ is the total number of time instants (144).

8. Method for transmitting and/or receiving data, the method comprising:

transmitting and/or receiving data using a hopping pattern (140),
determining an n-th time instant of the hopping pattern (140) based on the following formula:

$$R_{RE}(n) =$$
$$\begin{cases} \left\lfloor \big(R_{RE}{'}(n) * \text{w}(m) + R_{DC}(n) * \big(260 - \text{w}(m)\big) + 2^{15}\big)/2^{16} \right\rfloor - 130, \text{ for } R_{RE}{'}(n) < 2^{16} \\ \left\lfloor \big(\big(2^{17} - 1 - R_{RE}{'}(n)\big) * \text{w}(m) + R_{DC}(n) * \big(260 - \text{w}(m)\big) + 2^{15}\big)/2^{16} \right\rfloor - 130, \text{ for } R_{RE}{'}(n) \geq 2^{16} \end{cases}$$

wherein $R_{RE}(n)$ describes a pseudo-random time offset with respect to a respective position of a periodic time grid having a periodic spacing of 260 symbols,
wherein $R_{RE}'(n)$ describes a sequence of pseudo-random time offsets,
wherein n is a natural number,
wherein $m = n\ modulo$ 36,
wherein $w(m)$ describes a window function,
wherein $R_{DC}(n)$ describes an pseudo-random offset and $R_{DC} \in \{0,1,..., 2^{16}\text{-}1\}$.

**9.** Computer program comprising instructions which, when the program is executed by a computer, cause the computer to carry out the steps of the method of claim 8.

**Patentansprüche**

**1.** Transceiver (102) eines Drahtloskommunikationsnetzwerks,

wobei der Transceiver (102) dazu konfiguriert ist, Daten unter Verwendung eines Sprungmusters (140) zu senden und/oder zu empfangen,
wobei der Transceiver (102) dazu konfiguriert ist, einen n-ten Zeitpunkt des Sprungmusters (140) auf der Basis der folgenden Formel zu bestimmen:

$$R_{RE}(n) =$$
$$\begin{cases} \left\lfloor \left(R_{RE}'(n) * w(m) + R_{DC}(n) * \left(260 - w(m)\right) + 2^{15}\right)/2^{16} \right\rfloor - 130, \text{ für } R_{RE}'(n) < 2^{16} \\ \left\lfloor \left(\left(2^{17} - 1 - R_{RE}'(n)\right) * w(m) + R_{DC}(n) * \left(260 - w(m)\right) + 2^{15}\right)/2^{16} \right\rfloor - 130, \text{ für } R_{RE}'(n) \geq 2^{16} \end{cases}$$

wobei $R_{RE}(n)$ einen pseudozufälligen Zeitversatz in Bezug auf eine jeweilige Position eines periodischen Zeitgitters mit einem periodischen Abstand von 260 Symbolen beschreibt,
wobei $R_{RE}'(n)$ eine Sequenz von pseudozufälligen Zeitversätzen beschreibt,
wobei n eine natürliche Zahl ist,
wobei $m = n\ modulo$ 36,
wobei $w(m)$ eine Fensterfunktion beschreibt,
wobei $R_{DC}(n)$ einen pseudozufälligen Versatz beschreibt und $R_{DC} \in \{0,1,..., 2^{16}\text{-}1\}$.

**2.** Transceiver (102) gemäß Anspruch 1,

wobei $R_{RE}'(n)$

$$R_{RE}'(n) = \begin{cases} 2^{15} + r(n), & \text{für } m = 0 \\ \left(R_{RE}'(n-1) + r(n)\right) \text{modulo } 2^{17}, & ansonsten \end{cases}$$

wobei $r(n)$ eine pseudozufällige Sequenz ist.

**3.** Transceiver (102) gemäß Anspruch 2,

wobei der Transceiver (102) dazu konfiguriert ist, die pseudozufällige Sequenz $r(n)$ auf der Basis der folgenden Formel zu bestimmen:

$$r(\text{n}) = \lfloor \text{BSSHT\_CRC(n)} * \left(2 * c(m) + 1\right)/2^{16} \rfloor - c(m), \text{n} \in \{0,1,2, ..., N_{RE,bea} - 1\}$$

wobei BSSHT_CRC(n) eine pseudozufällige Zahl ist, die von einer ID einer Basisstation und dem n-ten Zeitpunkt oder einem jeweiligen Teil davon abhängt,
wobei $c(m)$ eine Zeitmusterschrittgröße ist,
wobei $N_{RE,bea}$ eine Anzahl von Elementen beschreibt, nach denen eine Berechnung von BSSHT_CRC(n) erneut berechnet werden muss.

**4.** Transceiver (102) gemäß Anspruch 3,

wobei der Transceiver (102) dazu konfiguriert ist, die Schrittgröße *c(m)* auf der Basis der folgenden Tabelle in Abhängigkeit von m zu bestimmen:

| *m* | 0 | 1 | 2 | 3 | 4 | 5 | 6 | 7 | 8 |
|---|---|---|---|---|---|---|---|---|---|
| *c(m)* | 32768 | 0 | 0 | 0 | 0 | 0 | 0 | 0 | 0 |

| *m* | 9 | 10 | 11 | 12 | 13 | 14 | 15 | 16 | 17 |
|---|---|---|---|---|---|---|---|---|---|
| *c(m)* | 5201 | 7057 | 7057 | 7057 | 7057 | 7057 | 7057 | 7057 | 7057 |

| *m* | 18 | 19 | 20 | 21 | 22 | 23 | 24 | 25 | 26 |
|---|---|---|---|---|---|---|---|---|---|
| *c(m)* | 7057 | 7057 | 7057 | 7057 | 7057 | 7057 | 7057 | 7057 | 7057 |

| *m* | 18 | 19 | 20 | 21 | 22 | 23 | 24 | 25 | 26 |
|---|---|---|---|---|---|---|---|---|---|
| *c(m)* | 7057 | 7057 | 7057 | 7057 | 7057 | 7057 | 7057 | 7057 | 7057 |

5. Transceiver (102) gemäß einem der Ansprüche 1 bis 4,
   wobei der Transceiver (102) dazu konfiguriert ist, die Fensterfunktion *w(m)* auf der Basis der folgenden Tabelle in Abhängigkeit von m zu berechnen:

| *m* | 0 | 1 | 2 | 3 | 4 | 5 | 6 | 7 | 8 |
|---|---|---|---|---|---|---|---|---|---|
| *w(m)* | 28 | 56 | 84 | 112 | 140 | 168 | 196 | 224 | 252 |

| *m* | 9 | 10 | 11 | 12 | 13 | 14 | 15 | 16 | 17 |
|---|---|---|---|---|---|---|---|---|---|
| *w(m)* | 260 | 260 | 260 | 260 | 260 | 260 | 260 | 260 | 260 |

| *m* | 18 | 19 | 20 | 21 | 22 | 23 | 24 | 25 | 26 |
|---|---|---|---|---|---|---|---|---|---|
| *w(m)* | 260 | 260 | 260 | 260 | 260 | 260 | 260 | 260 | 260 |

| *m* | 27 | 28 | 29 | 30 | 31 | 32 | 33 | 34 | 35 |
|---|---|---|---|---|---|---|---|---|---|
| *w(m)* | 252 | 224 | 196 | 168 | 140 | 112 | 84 | 56 | 28 |

6. Transceiver (102) gemäß einem der Ansprüche 1 bis 5,

   wobei der Transceiver (102) dazu konfiguriert ist, den pseudozufälligen Versatz $R_{DC}(n)$ auf der Basis der folgenden Formel zu bestimmen:

$$R_{DC}(n) = CRC32(BSSHE(R_E(n))) \text{ modulo } 2^{16}$$

   wobei CRC32 eine 32-Bit-Zyklische-Redundanzprüfung ist,

   wobei $R_E(n) = \left\lfloor \frac{n+18}{36} \right\rfloor \text{ modulo } 2^{16}$,

   wobei *BSSHE* eine kombinierte Zahl ist, die aus einer Kombination von $R_E(n)$ und einer Kurzadresse der Basisstation resultiert.

7. Transceiver (102) gemäß einem der Ansprüche 1 bis 6,

wobei der Transceiver (102) dazu konfiguriert ist, eine Zeitdifferenz zwischen sofort aufeinanderfolgenden Sprüngen des Sprungmusters (140) auf der Basis der folgenden Formel zu bestimmen:

$$T_{RE}(\mathrm{n}) = \left(260 - R_{RE}(\mathrm{n}-1) + R_{RE}(\mathrm{n})\right) * \Delta T_{sym_{UL-ULP}}, \quad \mathrm{n} \in \{1,2,3,\dots,\mathrm{N}_{RE}-1\},$$

wobei $\Delta T_{symUL-ULP}$ eine Symboldauer ist,
wobei $\mathrm{N}_{RE}$ die Gesamtanzahl von Zeitpunkten (144) ist.

8. Ein Verfahren zum Senden und/oder Empfangen von Daten, wobei das Verfahren folgende Schritte aufweist:

Senden und/oder Empfangen von Daten unter Verwendung eines Sprungmusters (140),
Bestimmen eines n-ten Zeitpunkts des Sprungmusters (140) auf der Basis der folgenden Formel:

$$R_{RE}(n) =$$
$$\begin{cases} \left\lfloor \left(R_{RE}{}'(n) * w(m) + R_{DC}(n) * \left(260 - \mathrm{w}(m)\right) + 2^{15}\right)/2^{16}\right\rfloor - 130, \text{ für } R_{RE}{}'(n) < 2^{16} \\ \left\lfloor \left(\left(2^{17} - 1 - R_{RE}{}'(n)\right) * \mathrm{w}(m) + R_{DC}(n) * \left(260 - \mathrm{w}(m)\right) + 2^{15}\right)/2^{16}\right\rfloor - 130, \text{ für } R_{RE}{}'(n) \geq 2^{16} \end{cases}$$

wobei $R_{RE}(n)$ einen pseudozufälligen Zeitversatz in Bezug auf eine jeweilige Position eines periodischen Zeitgitters mit einem periodischen Abstand von 260 Symbolen beschreibt,
wobei $R_{RE}{}'(n)$ eine Sequenz von pseudozufälligen Zeitversätzen beschreibt,
wobei $n$ eine natürliche Zahl ist,
wobei $m = n \text{ modulo } 36$,
wobei $w(m)$ eine Fensterfunktion beschreibt,
wobei $R_{DC}(n)$ einen pseudozufälligen Versatz beschreibt und $\mathrm{R}_{DC} \in \{0,1,\dots, 2^{16}\text{-}1\}$.

9. Computerprogramm, das Anweisungen aufweist, die bei Ausführung des Programms durch einen Computer bewirken, dass der Computer die Schritte des Verfahrens gemäß Anspruch 8 durchführt.


**Revendications**

1. Émetteur-récepteur (102) d'un réseau de communication sans fil,

dans lequel l'émetteur-récepteur (102) est configuré pour transmettre et/ou recevoir des données en utilisant un motif de saut (140),
dans lequel l'émetteur-récepteur (102) est configuré pour déterminer un n-ième instant du motif de saut (140) sur la base de la formule suivante :

$$R_{RE}(n) =$$
$$\begin{cases} \left\lfloor \left(R_{RE}{}'(n) * w(m) + R_{DC}(n) * \left(260 - \mathrm{w}(m)\right) + 2^{15}\right)/2^{16}\right\rfloor - 130, \text{ pour } R_{RE}{}'(n) < 2^{16} \\ \left\lfloor \left(\left(2^{17} - 1 - R_{RE}{}'(n)\right) * \mathrm{w}(m) + R_{DC}(n) * \left(260 - \mathrm{w}(m)\right) + 2^{15}\right)/2^{16}\right\rfloor - 130, \text{ pour } R_{RE}{}'(n) \geq 2^{16} \end{cases}$$

dans laquelle $R_{RE}(n)$ décrit un décalage temporel pseudo-aléatoire par rapport à une position respective d'une grille temporelle périodique ayant un espacement périodique de 260 symboles,
dans laquelle $R_{RE}{}'(n)$ décrit une séquence de décalages temporels pseudo-aléatoires,
dans laquelle $n$ est un nombre naturel,
dans laquelle $m = n \text{ modulo } 36$,
dans laquelle $w(m)$ décrit une fonction fenêtre,
dans laquelle $R_{DC}(n)$ décrit un décalage pseudo-aléatoire et $\mathrm{R}_{DC} \in \{0,1,\dots, 2^{16}\text{-}1\}$.

2. Émetteur-récepteur (102) selon la revendication 1,

dans lequel $R_{RE}{}'(n)$

$$R_{RE}'(n) = \begin{cases} 2^{15} + r(n), & \text{pour } m = 0 \\ (R_{RE}'(n\text{-}1) + r(n)) \text{ modulo } 2^{17}, & \text{sinon} \end{cases}$$

dans laquelle $r(n)$ est une séquence pseudo-aléatoire.

3. Émetteur-récepteur (102) selon la revendication 2,

dans lequel l'émetteur-récepteur (102) est configuré pour déterminer la séquence pseudo-aléatoire $r(n)$ sur la base de la formule suivante :

$$r(n) = \lfloor BSSHT\_CRC(n) * (2 * c(m) + 1)/2^{16} \rfloor - c(m), n \in \{0,1,2, \ldots, N_{RE,bea} - 1\}$$

dans laquelle BSSHT_CRC(n) est un nombre pseudo-aléatoire qui dépend d'un identifiant d'une station de base et du n-ième instant, ou d'une partie respective de celui-ci,
dans laquelle $c(m)$ est une taille de pas de motif temporel,
dans laquelle $N_{RE,bea}$ décrit un nombre d'éléments après lesquels un calcul de BSSHT_CRC(n) doit être recalculé.

4. Émetteur-récepteur (102) selon la revendication 3,
dans lequel l'émetteur-récepteur (102) est configuré pour déterminer la taille de pas $c(m)$ sur la base du tableau suivant en fonction de m :

| $m$ | 0 | 1 | 2 | 3 | 4 | 5 | 6 | 7 | 8 |
|---|---|---|---|---|---|---|---|---|---|
| $c(m)$ | 32768 | 0 | 0 | 0 | 0 | 0 | 0 | 0 | 0 |

| $m$ | 9 | 10 | 11 | 12 | 13 | 14 | 15 | 16 | 17 |
|---|---|---|---|---|---|---|---|---|---|
| $c(m)$ | 5201 | 7057 | 7057 | 7057 | 7057 | 7057 | 7057 | 7057 | 7057 |

| $m$ | 18 | 19 | 20 | 21 | 22 | 23 | 24 | 25 | 26 |
|---|---|---|---|---|---|---|---|---|---|
| $c(m)$ | 7057 | 7057 | 7057 | 7057 | 7057 | 7057 | 7057 | 7057 | 7057 |

| $m$ | 27 | 28 | 29 | 30 | 31 | 32 | 33 | 34 | 35 |
|---|---|---|---|---|---|---|---|---|---|
| $c(m)$ | 5201 | 0 | 0 | 0 | 0 | 0 | 0 | 0 | 0 |

5. Émetteur-récepteur (102) selon l'une quelconque des revendications 1 à 4,
dans lequel l'émetteur-récepteur (102) est configuré pour déterminer la fonction fenêtre $w(m)$ sur la base du tableau suivant en fonction de m :

| $m$ | 0 | 1 | 2 | 3 | 4 | 5 | 6 | 7 | 8 |
|---|---|---|---|---|---|---|---|---|---|
| $w(m)$ | 28 | 56 | 84 | 112 | 140 | 168 | 196 | 224 | 252 |

| $m$ | 9 | 10 | 11 | 12 | 13 | 14 | 15 | 16 | 17 |
|---|---|---|---|---|---|---|---|---|---|
| $w(m)$ | 260 | 260 | 260 | 260 | 260 | 260 | 260 | 260 | 260 |

| $m$ | 18 | 19 | 20 | 21 | 22 | 23 | 24 | 25 | 26 |
|---|---|---|---|---|---|---|---|---|---|
| $w(m)$ | 260 | 260 | 260 | 260 | 260 | 260 | 260 | 260 | 260 |

| $m$ | 27 | 28 | 29 | 30 | 31 | 32 | 33 | 34 | 35 |
|---|---|---|---|---|---|---|---|---|---|
| $w(m)$ | 252 | 224 | 196 | 168 | 140 | 112 | 84 | 56 | 28 |

**6.** Émetteur-récepteur (102) selon l'une quelconque des revendications 1 à 5,

dans lequel l'émetteur-récepteur (102) est configuré pour déterminer le décalage pseudo-aléatoire $R_{DC}(n)$ sur la base de la formule suivante :

$$R_{DC}(n) = CRC32(BSSHE(R_E(n))) \text{ modulo } 2^{16}$$

dans laquelle CRC32 est un contrôle de redondance cyclique de 32 bits,

dans lequel $R_E(n) = \left\lfloor \frac{n+18}{36} \right\rfloor$ modulo $2^{16}$ ,

dans laquelle *BSSHE* est un nombre combiné résultant d'une combinaison de $R_E(n)$ et d'une adresse courte de la station de base.

**7.** Émetteur-récepteur (102) selon l'une quelconque des revendications 1 à 6,

dans lequel l'émetteur-récepteur (102) est configuré pour déterminer une différence temporelle entre les sauts immédiatement consécutifs du motif de saut (140) sur la base de la formule suivante :

$$T_{RE}(n) = (260 - R_{RE}(n-1) + R_{RE}(n)) * \Delta T_{symUL-ULP}, \ n \in \{1,2,3,\dots,N_{RE}-1\},$$

dans laquelle $\Delta T_{symUL-ULP}$ est une durée symbolique,
dans laquelle $N_{RE}$ est le nombre total d'instants (144).

**8.** Procédé pour transmettre et/ou recevoir des données, le procédé comprenant : la transmission et/ou la réception des données en utilisant un motif de saut (140), la détermination d'un n-ième instant du motif de saut (140) sur la base de la formule suivante :

$$R_{RE}(n) = \begin{cases} \left\lfloor \left(R_{RE}'(n) * w(m) + R_{DC}(n) * (260 - w(m)) + 2^{15}\right)/2^{16} \right\rfloor - 130, \text{ pour } R_{RE}'(n) < 2^{16} \\ \left\lfloor \left((2^{17} - 1 - R_{RE}'(n)) * w(m) + R_{DC}(n) * (260 - w(m)) + 2^{15}\right)/2^{16} \right\rfloor - 130, \text{ pour } R_{RE}'(n) \geq 2^{16} \end{cases}$$

dans laquelle $R_{RE}(n)$ décrit un décalage temporel pseudo-aléatoire par rapport à une position respective d'une grille temporelle périodique ayant un espacement périodique de 260 symboles,
dans laquelle $R_{RE}'(n)$ décrit une séquence de décalages temporels pseudo-aléatoires,
dans laquelle *n* est un nombre naturel,
dans laquelle *m = n modulo* 36,
dans laquelle *w(m)* décrit une fonction fenêtre,
dans laquelle $R_{DC}(n)$ décrit un décalage pseudo-aléatoire et $R_{DC} \in \{0,1,\dots,2^{16}-1\}$.

**9.** Programme informatique comprenant des instructions qui, lorsque le programme est exécuté par un ordinateur, amènent l'ordinateur à exécuter les étapes du procédé selon la revendication 8.

Fig. 1

142

142

142

142

142

142

142

sub-packet

frequency

time

data symbols

synchronization symbols

data symbols

Fig. 2

Fig. 3

EP 4 595 236 B1

Fig. 4

Fig. 5

EP 4 595 236 B1

Fig. 6

Fig. 7

domain of grid offsets
within each block

actual grid offset
of a slot

distance to grid

144

153

152

158

block n

172

transmission slot index

domain of a slot
pursuant to the
previous value

block n+1

172

**Fig. 8**

probability density

uniform
distribution

-1/2

0

normalized grid offset 1/2

**Fig. 9**

domain of grid offsets within each block

actual grid offset of a slot

distance to grid

144

0

153

152

block n

172

158

block n+1

172

transmission slot index

domain of a slot pursuant to the previous value

Fig. 10

probability density

uniform distribution

-1/2

0

normalized grid offset 1/2

Fig. 11

Fig. 12

Fig. 13

Fig. 14

Fig. 15

Fig. 16

Fig. 17

Fig. 18

Fig. 19

**EP 4 595 236 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021250146 A1